(19)

**Europäisches Patentamt**
**European Patent Office**
**Office européen des brevets**

(11) **EP 4 322 528 A1**

(12) **EUROPEAN PATENT APPLICATION**
published in accordance with Art. 153(4) EPC

(43) Date of publication:
**14.02.2024  Bulletin 2024/07**

(21) Application number: **22785032.8**

(22) Date of filing: **08.04.2022**

(51) International Patent Classification (IPC):
$H04N\ 19/11^{(2014.01)}$     $H04N\ 19/593^{(2014.01)}$
$H04N\ 19/132^{(2014.01)}$    $H04N\ 19/184^{(2014.01)}$
$H04N\ 19/70^{(2014.01)}$     $H04N\ 19/119^{(2014.01)}$
$H04N\ 19/186^{(2014.01)}$

(52) Cooperative Patent Classification (CPC):
**H04N 19/11; H04N 19/119; H04N 19/132;**
**H04N 19/184; H04N 19/186; H04N 19/593;**
**H04N 19/70**

(86) International application number:
**PCT/KR2022/005158**

(87) International publication number:
**WO 2022/216124 (13.10.2022 Gazette 2022/41)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **08.04.2021   US 202163172616 P**

(71) Applicant: **LG Electronics Inc.**
**Yeongdeungpo-gu**
**Seoul 07336 (KR)**

(72) Inventors:
• **PARK, Nae Ri**
**Seoul 06772 (KR)**

• **LIM, Jaehyun**
**Seoul 06772 (KR)**
• **YOO, Sunmi**
**Seoul 06772 (KR)**
• **NAM, Jung Hak**
**Seoul 06772 (KR)**
• **JANG, Hyeong Moon**
**Seoul 06772 (KR)**
• **CHOI, Jangwon**
**Seoul 06772 (KR)**
• **KIM, Seung Hwan**
**Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **IMAGE ENCODING/DECODING METHOD AND DEVICE FOR PERFORMING PREDICTION OF IMAGE ON BASIS OF MULTIPLE INTRA PREDICTIONS, AND METHOD FOR TRANSMITTING BITSTREAM**

(57)    An image encoding/decoding method and apparatus are provided. The image decoding method is performed by the image decoding apparatus and comprises generating a first prediction sample for a current block based on a first intra prediction mode, generating a second prediction sample for the current block based on a second intra prediction mode, and generating a prediction block for the current block based on the first prediction sample and the second prediction sample. The prediction block may be generated by respectively applying a first weight and a second weight to the first prediction sample and the second prediction sample.

EP 4 322 528 A1

FIG. 20

START

S2001

GENERATE FIRST PREDICTION
SAMPLE BY FIRST MODE

S2002

GENERATE SECOND PREDICTION
SAMPLE BY SECOND MODE

S2003

DETERMINE BLENDING REGION

S2004

DERIVE WEIGHT

S2005

BLEND FIRST PREDICTION SAMPLE
AND SECOND PREDICTION SAMPLE

END

## Description

### Technical Field

The present disclosure relates to an image encoding/decoding method and apparatus, and, more particularly, to an image encoding/decoding method and apparatus for performing prediction on a block in an image based on a plurality of intra predictions and a method of transmitting a bitstream generated by the image encoding method/apparatus of the present disclosure.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.
Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.
Another object of the present disclosure is to provide an image encoding/decoding method and apparatus for performing prediction on a block in an image based on a plurality of intra predictions.
Another object of the present disclosure is to provide a method and apparatus for encoding/decoding an image by generating a plurality of prediction blocks and applying a weight to each prediction block.
Another object of the present disclosure is to provide a method of transmitting a bitstream generated by an image encoding method or apparatus according to the present disclosure.
Another object of the present disclosure is to provide a recording medium storing a bitstream generated by an image encoding method or apparatus according to the present disclosure.
Another object of the present disclosure is to provide a recording medium storing a bitstream received, decoded and used to reconstruct an image by an image decoding apparatus according to the present disclosure.
The technical problems solved by the present disclosure are not limited to the above technical problems and other technical problems which are not described herein will become apparent to those skilled in the art from the following description.

### Technical Solution

According to an embodiment of the present disclosure, an image decoding method performed by an image decoding apparatus comprises generating a first prediction sample for a current block based on a first intra prediction mode, generating a second prediction sample for the current block based on a second intra prediction mode and generating a prediction block for the current block based on the first prediction sample and the second prediction sample, and the prediction block may be generated by respectively applying a first weight and a second weight to the first prediction sample and the second prediction sample.
According to an embodiment of the present disclosure, the first intra prediction mode may be determined to be a predetermined mode and the second intra prediction mode may be signaled in a bitstream.
According to an embodiment of the present disclosure, the second intra prediction mode may be determined based on a most probable mode (MPM) list, and the MPM list may comprise an angular mode derived by a neighboring block of the current block and an angular mode obtained by adding or subtracting 4n (n being a positive integer) to or from the derived angular mode.
According to an embodiment of the present disclosure, the second intra prediction mode may be an angular mode and the first intra prediction mode may be a non-angular mode.
According to an embodiment of the present disclosure, the first weight or the second weight may be determined in units of blocks based on at least one of the second intra prediction mode or a size of the current block.
According to an embodiment of the present disclosure, the first weight or the second weight may be determined differently for each sample position in the current block based on the second intra prediction mode.

According to an embodiment of the present disclosure, the first weight or the second weight may be determined differently based on a comparison between the second intra prediction mode and a predetermined threshold mode.

According to an embodiment of the present disclosure, the first weight or the second weight may be determined differently based on a distance between a reference region of intra prediction determined according to the second intra prediction mode and a sample position in the current block.

According to an embodiment of the present disclosure, the image decoding method may further comprise determining a dividing line dividing the current block into two or more regions, and the first weight or the second weight may be determined differently based on the dividing line.

According to an embodiment of the present disclosure, the dividing line may be determined based on the second intra prediction mode.

According to an embodiment of the present disclosure, the dividing line may be determined based on division information obtained from the bitstream.

According to an embodiment of the present disclosure, signaling of the second intra prediction mode may comprise only an MPM index for the MPM list.

According to an embodiment of the present disclosure, based on the current block being a chroma block, the first weight and the second weight may be determined based on a first weight and a second weight for a luma block at a position corresponding to a position of the current block.

According to an embodiment of the present disclosure, decoding information indicating whether to perform prediction on the current block based on a combined intra prediction (CIP) mode from a bitstream may be further included.

According to an embodiment of the present disclosure, an image encoding method performed by an image encoding apparatus comprises generating a first prediction sample for a current block based on a first intra prediction mode, generating a second prediction sample for the current block based on a second intra prediction mode and generating a prediction block for the current block based on the first prediction sample and the second prediction sample, and the prediction block may be generated by respectively applying a first weight and a second weight to the first prediction sample and the second prediction sample.

According to an embodiment of the present disclosure, a bitstream generated by an image encoding apparatus or an image encoding method may be transmitted.

According to an embodiment of the present disclosure, a bitstream generated by an image encoding method may be stored and recorded in a computer-readable medium.

The features briefly summarized above with respect to the present disclosure are merely exemplary aspects of the detailed description below of the present disclosure, and do not limit the scope of the present disclosure.

**Advantageous Effects**

According to the present disclosure, it is possible to provide an image encoding/decoding method and apparatus with improved encoding/decoding efficiency.

In addition, according to the present disclosure, it is possible to provide an image encoding/decoding method and apparatus for performing prediction on a block in an image based on a plurality of intra predictions.

In addition, according to the present disclosure, it is possible to provide a method and apparatus for encoding/decoding an image by generating a plurality of prediction blocks and applying a weight to each prediction block.

Also, according to the present disclosure, it is possible to provide a method of transmitting a bitstream generated by an image encoding method or apparatus according to the present disclosure.

Also, according to the present disclosure, it is possible to provide a recording medium storing a bitstream generated by an image encoding method or apparatus according to the present disclosure.

Also, according to the present disclosure, it is possible to provide a recording medium storing a bitstream received, decoded and used to reconstruct an image by an image decoding apparatus according to the present disclosure.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a view showing a partitioning type of a block according to a multi-type tree structure.

FIG. 5 is a view showing a signaling mechanism of partition splitting information in a quadtree with nested multi-type tree structure according to the present disclosure.

FIG. 6 is a flowchart illustrating an intra prediction based video/image encoding method.

FIG. 7 is a view illustrating a configuration of the intra prediction unit 185 according to the present disclosure.

FIG. 8 is a flowchart illustrating an intra prediction based video/image decoding method.

FIG. 9 is a view illustrating a configuration of the intra predictor 265 according to the present disclosure.

FIG. 10 is a flowchart illustrating an intra prediction mode signaling procedure in an image encoding apparatus.

FIG. 11 is a flowchart illustrating an intra prediction mode determination procedure in an image decoding apparatus.

FIG. 12 is a flowchart illustrating an intra prediction mode derivation procedure in greater detail.

FIG. 13 is a diagram for explaining a procedure for deriving a prediction sample for a chroma component.

FIG. 14 is a view illustrating an intra prediction direction according to an embodiment of the present disclosure.

FIG. 15 is a view illustrating an intra prediction direction according to another embodiment of the present disclosure.

FIG. 16 is a diagram for explaining a position dependent intra prediction (PDPC) process according to the present disclosure.

FIG. 17 is a diagram for explaining a Multi-Reference Line (MRL) process according to the present disclosure.

FIGS. 18a and 18b are diagrams for explaining an Intra Sub-Partitions (ISP) process according to the present disclosure.

FIG. 19 is a diagram for explaining a transform method applied to a residual block.

FIG. 20 is a diagram for explaining a process of generating a prediction block by combining a plurality of prediction blocks according to an embodiment of the present disclosure.

FIG. 21 is a diagram for explaining a process of applying a weight to a plurality of prediction samples according to the present disclosure.

FIG. 22 is a diagram for explaining a weight applied to a prediction sample according to an embodiment of the present disclosure.

FIG. 23 is a diagram for explaining a division direction of a region in a prediction block, to which a weight is applied, according to an embodiment of the present disclosure.

FIG. 24 is a diagram for explaining a division direction of a region in a prediction block, to which a weight is applied, according to another embodiment of the present disclosure.

FIG. 25 is a diagram for explaining a division direction of a region in a prediction block, to which a weight is applied, according to another embodiment of the present disclosure.

FIG. 26 is a diagram for explaining signaling of information related to intra prediction according to an embodiment of the present disclosure.

FIG. 27 is a diagram for explaining signaling of information related to an intra prediction mode.

FIG. 28 is a diagram for explaining signaling of information related to intra prediction according to an embodiment of the present disclosure.

FIGS. 29a, 29b, 29c, 29d, and 29e are diagrams for explaining boundary smoothing according to the present disclosure.

FIG. 30 is a diagram for explaining an image encoding/decoding process for performing intra prediction by applying a weight according to an embodiment of the present disclosure.

FIG. 31 is a diagram for explaining an image encoding/decoding apparatus according to an embodiment of the present disclosure.

FIG. 32 is a view showing a content streaming system to which an embodiment of the present disclosure is applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an $M \times N$ block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean "a luma block of a current block" unless explicitly stated as a chroma block. The "chroma block of the current block" may be expressed by including an explicit description of a chroma block, such as "chroma block" or "current chroma block".

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

## Overview of video coding system

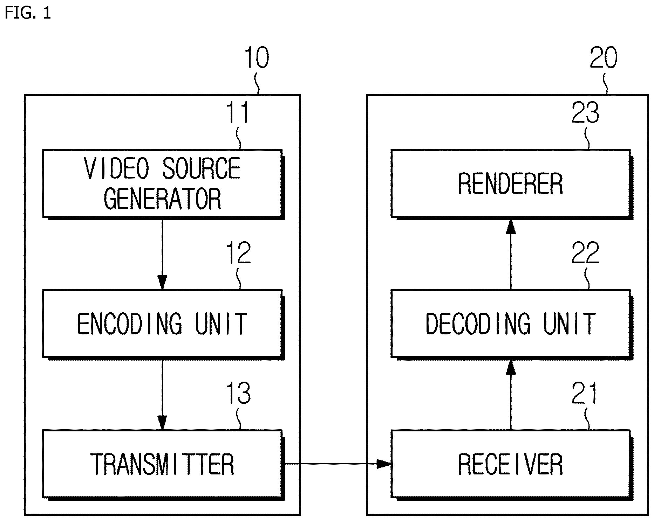

FIG. 1 is a view showing a video coding system according to the present disclosure.

The video coding system according to an embodiment may include an encoding device 10 and a decoding device 20. The encoding device 10 may deliver encoded video and/or image information or data to the decoding device 20 in the form of a file or streaming via a digital storage medium or network.

The encoding device 10 according to an embodiment may include a video source generator 11, an encoding unit(encoder) 12 and a transmitter 13. The decoding device 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may transmit the encoded video/image information or data output in the form of a bitstream to the receiver 21 of the decoding device 20 through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

**Overview of image encoding apparatus**

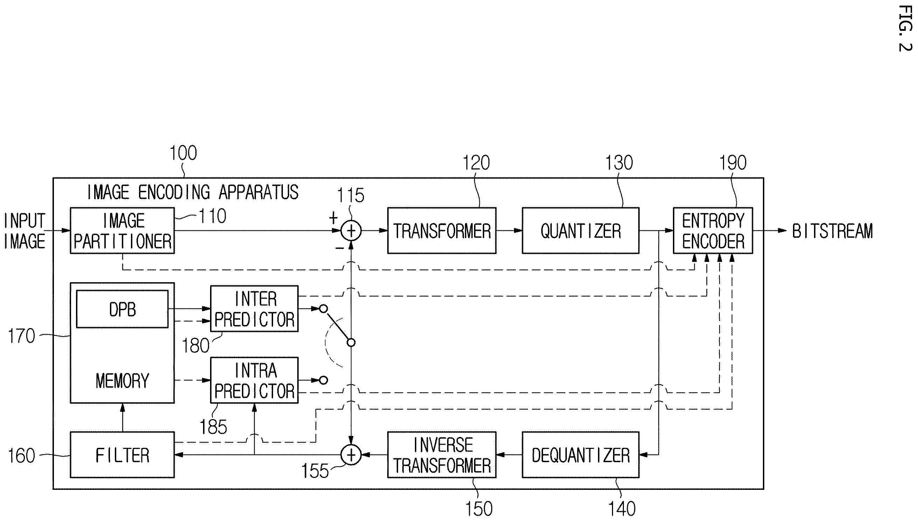

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit(intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit(inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

### Overview of image decoding apparatus

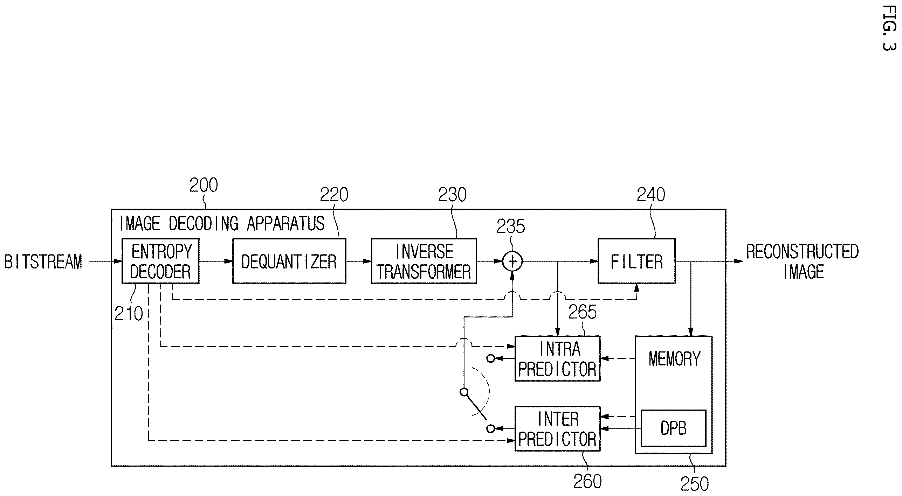

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra prediction unit 265. The inter predictor(inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter predictor 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra predictor 265 may predict the current block by referring to the samples in the current picture. The description of the intra prediction unit 185 is equally applied to the intra prediction unit 265.

The inter predictor 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter predictor 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

## Overview of partitioning of CTU

As described above, the coding unit may be acquired by recursively partitioning the coding tree unit (CTU) or the largest coding unit (LCU) according to a quad-tree/binary-tree/ternary-tree (QT/BT/TT) structure. For example, the CTU may be first partitioned into quadtree structures. Thereafter, leaf nodes of the quadtree structure may be further partitioned by a multi-type tree structure.

Partitioning according to quadtree means that a current CU (or CTU) is partitioned into equally four. By partitioning according to quadtree, the current CU may be partitioned into four CUs having the same width and the same height. When the current CU is no longer partitioned into the quadtree structures, the current CU corresponds to the leaf node of the quad-tree structure. The CU corresponding to the leaf node of the quadtree structure may be no longer partitioned and may be used as the above-described final coding unit. Alternatively, the CU corresponding to the leaf node of the quadtree structure may be further partitioned by a multi-type tree structure.

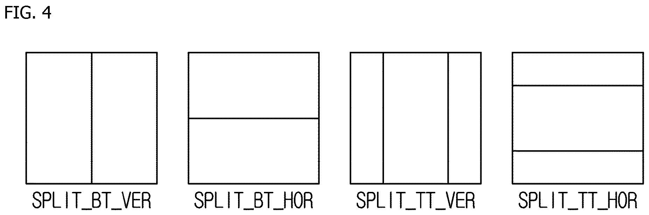

FIG. 4 is a view showing a partitioning type of a block according to a multi-type tree structure. Partitioning according to the multi-type tree structure may include two types of splitting according to a binary tree structure and two types of splitting according to a ternary tree structure.

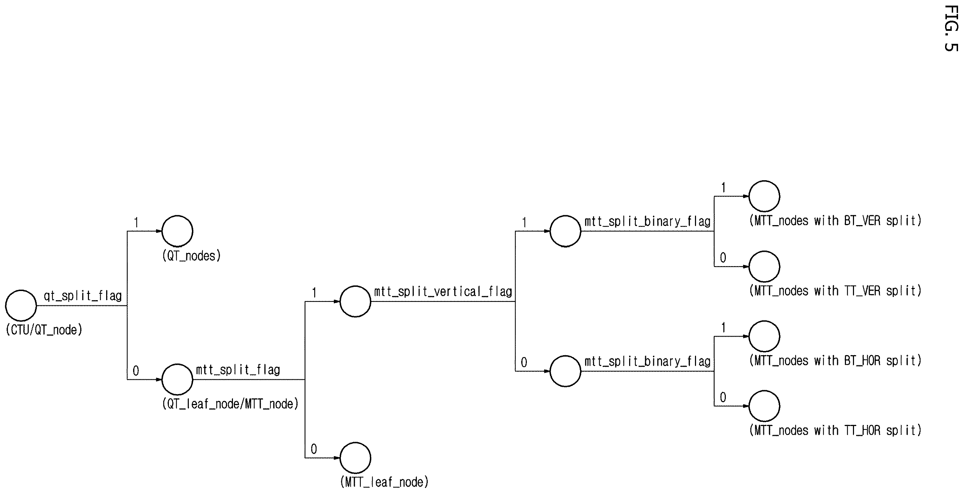

The two types of splitting according to the binary tree structure may include vertical binary splitting (SPLIT_BT_VER) and horizontal binary splitting (SPLIT_BT_HOR). Vertical binary splitting (SPLIT_BT_VER) means that the current CU is split into equally two in the vertical direction. As shown in FIG. 4, by vertical binary splitting, two CUs having the same height as the current CU and having a width which is half the width of the current CU may be generated. Horizontal binary splitting (SPLTT_BT_HOR) means that the current CU is split into equally two in the horizontal direction. As shown in FIG. 5, by horizontal binary splitting, two CUs having a height which is half the height of the current CU and having the same width as the current CU may be generated.

Two types of splitting according to the ternary tree structure may include vertical ternary splitting (SPLIT_TT_VER) and horizontal ternary splitting (SPLIT_TT_HOR). In vertical ternary splitting (SPLIT_TT_VER), the current CU is split in the vertical direction at a ratio of 1:2:1. As shown in FIG. 4, by vertical ternary splitting, two CUs having the same height as the current CU and having a width which is 1/4 of the width of the current CU and a CU having the same height as the current CU and having a width which is half the width of the current CU may be generated. In horizontal ternary splitting (SPLIT_TT_HOR), the current CU is split in the horizontal direction at a ratio of 1:2:1. As shown in FIG. 5, by horizontal ternary splitting, two CUs having a height which is 1/4 of the height of the current CU and having the same width as the current CU and a CU having a height which is half the height of the current CU and having the same width as the current CU may be generated.

FIG. 5 is a view showing a signaling mechanism of partition splitting information in a quadtree with nested multi-type tree structure according to the present disclosure.

Here, the CTU is treated as the root node of the quadtree, and is partitioned for the first time into a quadtree structure. Information (e.g., qt_split_flag) indicating whether quadtree splitting is performed with respect to the current CU (CTU or node (QT_node) of the quadtree) may be signaled. For example, when qt_split_flag has a first value (e.g., "1"), the current CU may be quadtree-partitioned. In addition, when qt_split_flag has a second value (e.g., "0"), the current CU is not quadtree-partitioned, but becomes the leaf node (QT_leaf node) of the quadtree. Each quadtree leaf node may then be further partitioned into multitype tree structures. That is, the leaf node of the quadtree may become the node (MTT_node) of the multi-type tree. In the multitype tree structure, a first flag (e.g., Mtt_split_cu_flag) may be signaled to indicate whether the current node is additionally partitioned. If the corresponding node is additionally partitioned (e.g., if the first flag is 1), a second flag (e.g., Mtt_split_cu_vertical_flag) may be signaled to indicate the splitting direction. For example, the splitting direction may be a vertical direction if the second flag is 1 and may be a horizontal direction if the second flag is 0. Then, a third flag (e.g., Mtt_split_cu_binary_flag) may be signaled to indicate whether the split type is a binary split type or a ternary split type. For example, the split type may be a binary split type when the third flag is 1 and may be a ternary split type when the third flag is 0. The node of the multi-type tree acquired by binary splitting or ternary splitting may be further partitioned into multi-type tree structures. However, the node of the multi-type tree may not be partitioned into quadtree structures. If the first flag is 0, the corresponding node of the multi-type tree is no longer split but becomes the leaf node (MTT_leaf node) of the multi-type tree. The CU corresponding to the leaf node of the multi-type tree may be used as the above-described final coding unit.

Based on the mtt_split cu vertical flag and the mtt_split_cu_binary_flag, a multi-type tree splitting mode (MttSplitMode) of a CU may be derived as shown in Table 1 below.

[Table 1]

| MttSplitMode | mtt_split_cu_vertical_flag | mtt_split_cu_binary_flag |
|---|---|---|
| SPLIT_TT_HOR | 0 | 0 |
| SPLIT_BT_HOR | 0 | 1 |
| SPLIT_TT_VER | 1 | 0 |
| SPLIT_BT_VER | 1 | 1 |

One CTU may include a coding block of luma samples (hereinafter referred to as a "luma block") and two coding blocks of chroma samples corresponding thereto (hereinafter referred to as "chroma blocks"). The above-described coding tree scheme may be equally or separately applied to the luma block and chroma block of the current CU. Specifically, the luma and chroma blocks in one CTU may be partitioned into the same block tree structure and, in this case, the tree structure may be represented as SINGLE_TREE. Alternatively, the luma and chroma blocks in one CTU may be partitioned into separate block tree structures, and, in this case, the tree structure may be represented as DUAL_TREE. That is, when the CTU is partitioned into dual trees, the block tree structure for the luma block and the block tree structure for the chroma block may be separately present. In this case, the block tree structure for the luma block may be called DUAL TREE_LUMA, and the block tree structure for the chroma component may be called DUAL_TREE_CHROMA. For P and B slice/tile groups, luma and chroma blocks in one CTU may be limited to have the same coding tree structure. However, for I slice/tile groups, luma and chroma blocks may have a separate block tree structure from each other. If the separate block tree structure is applied, the luma CTB may be partitioned into CUs based on a particular coding tree structure, and the chroma CTB may be partitioned into chroma CUs based on another coding tree structure. That is, this means that a CU in an I slice/tile group, to which the separate block tree structure is applied, may be composed of a coding block of luma components or coding blocks of two chroma components. In addition, a CU in an I slice/tile group, to which the same block tree structure is applied, and a CU of a P or B slice/tile group may be composed of blocks of three color components (a luma component and two chroma components).

Although a quadtree coding tree structure with a nested multitype tree has been described, a structure in which a CU is partitioned is not limited thereto. For example, the BT structure and the TT structure may be interpreted as a concept included in a multiple partitioning tree (MPT) structure, and the CU may be interpreted as being partitioned through the QT structure and the MPT structure. In an example where the CU is partitioned through a QT structure and an MPT structure, a syntax element (e.g., MPT_split_type) including information on how many blocks the leaf node of the QT structure is partitioned into and a syntax element (ex. MPT_split_mode) including information on which of vertical and horizontal directions the leaf node of the QT structure is partitioned into may be signaled to determine a partitioning structure.

In another example, the CU may be partitioned in a different way than the QT structure, BT structure or TT structure. That is, unlike that the CU of the lower depth is partitioned into 1/4 of the CU of the higher depth according to the QT structure, the CU of the lower depth is partitioned into 1/2 of the CU of the higher depth according to the BT structure, or the CU of the lower depth is partitioned into 1/4 or 1/2 of the CU of the higher depth according to the TT structure, the CU of the lower depth may be partitioned into 1/5, 1/3, 3/8, 3/5, 2/3, or 5/8 of the CU of the higher depth in some cases, and the method of partitioning the CU is not limited thereto.

**Overview of intra prediction**

Hereinafter, intra prediction according to the present disclosure will be described.

Intra prediction may represent prediction for generating prediction samples for a current block based on reference samples in a picture to which a current block belongs (hereinafter referred to as a current picture). When intra prediction applies to a current block, neighboring reference samples to be used for intra prediction of the current block may be derived. The neighboring reference samples of the current block may include a total of 2xnh samples neighbor/adjacent to a left boundary of the current block having a size of nWxnH and samples adjacent to a bottom-left, a total of 2xnW samples adjacent to a top boundary of the current block and samples adjacent to a top-right, and one sample adjacent to a top-left of the current block. Alternatively, the neighboring reference samples of the current block may include a plurality of columns of top neighboring samples and a plurality of rows of left neighboring samples. In addition, the neighboring reference samples of the current block may include a total of nH samples adjacent to a right boundary of the current block having a size of nWxnH, a total of nW samples adjacent to a bottom boundary of the current block and one sample adjacent to a bottom-right of the current block.

However, some of the neighboring reference samples of the current block have not yet been decoded or may not be available. In this case, the decoder may construct neighboring reference samples to be used for prediction by substituting unavailable samples with available samples. Alternatively, neighboring reference samples to be used for prediction may be constructed through interpolation of available samples.

When the neighboring reference samples are derived, (i) a prediction sample may be derived based on an average or interpolation of neighboring reference samples of the current block, and (ii) the prediction sample may be derived based on a reference sample present in a specific (prediction) direction with respect to the prediction sample among the neighboring reference samples of the current block. The case of (i) may be called a non-directional mode or a non-angular mode, and the case of (ii) may be called a directional mode or an angular mode.

Also, the prediction sample may be generated through interpolation of the first neighboring sample positioned in the prediction direction of the intra prediction mode of the current block based on the prediction target sample of the current block among the neighboring reference samples and the second neighboring sample positioned in the opposite direction thereof. The above-described case may be referred to as linear interpolation intra prediction (LIP).

In addition, chroma prediction samples may be generated based on luma samples using a linear model. This case may be called an LM (linear model) mode.

In addition, a temporary prediction sample of the current block may be derived based on the filtered neighboring reference samples, and the prediction sample of the current block may be derived by a weighted sum of at least one reference sample derived according to the intra prediction mode among the existing neighboring reference samples, that is, unfiltered neighboring reference samples, and the temporary prediction sample. The above-described case may be referred to as position dependent intra prediction (PDPC).

In addition, a reference sample line with the highest prediction accuracy is selected from among multiple neighboring reference sample lines of the current block, to derive the prediction sample using the reference sample located in the prediction direction in the corresponding line, and, at this time, information on the used reference sample line (e.g., intra_luma_ref idx) may be encoded in a bitstream and signaled. This case may be referred to as multi-reference line (MRL) intra prediction or MRL-based intra prediction. When MRL is not applied, reference samples may be derived from reference sample lines directly adjacent to the current block and in this case, information on the reference sample lines may not be signaled.

In addition, the current block may be partitioned into vertical or horizontal sub-partitions and intra prediction may be performed based on the same intra prediction mode for each subpartition. In this case, the neighboring reference samples of the intra prediction may be derived in units of sub-partitions. That is, the reconstructed sample of the previous sub-partition in the encoding/decoding order may be used as the neighboring reference sample of the current sub-partition. In this case, the intra prediction mode for the current block is equally applied to the sub-partitions, but the intra prediction performance may be improved in some cases by deriving and using neighboring reference samples in units of sub-partitions. This prediction method may be called intra sub-partitions (ISP) or ISP-based intra prediction.

These intra prediction techniques may be called an intra prediction type or additional intra prediction mode to be distinguished from a direction or non-directional intra prediction mode. The intra prediction technique (intra prediction type, additional intra prediction mode, etc.) may be referred to as various terms such as an intra prediction technique or an additional intra prediction mode. For example, the intra prediction type (or additional intra prediction mode, etc.) may include at least one of the aforementioned LIP, LM, PDPC, MRL or ISP. A general intra prediction method excluding a specific intra prediction type such as LIP, LM, PDPC, MRL, and ISP may be referred to as a normal intra prediction type. The normal intra prediction type may be generally applied when the above specific intra prediction type is not applied, and prediction may be performed based on the above-described intra prediction mode. Meanwhile, if necessary, post-processing filtering may be performed on the derived prediction sample.

Specifically, the intra prediction procedure may include an intra prediction mode/type determination step, a neighboring reference sample derivation step, and an intra prediction mode/type based prediction sample derivation step. In addition, if necessary, a post-filtering step may be performed on the derived prediction sample.

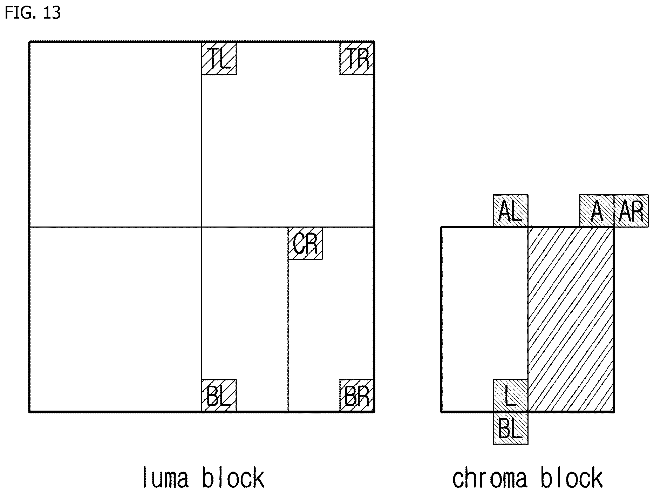

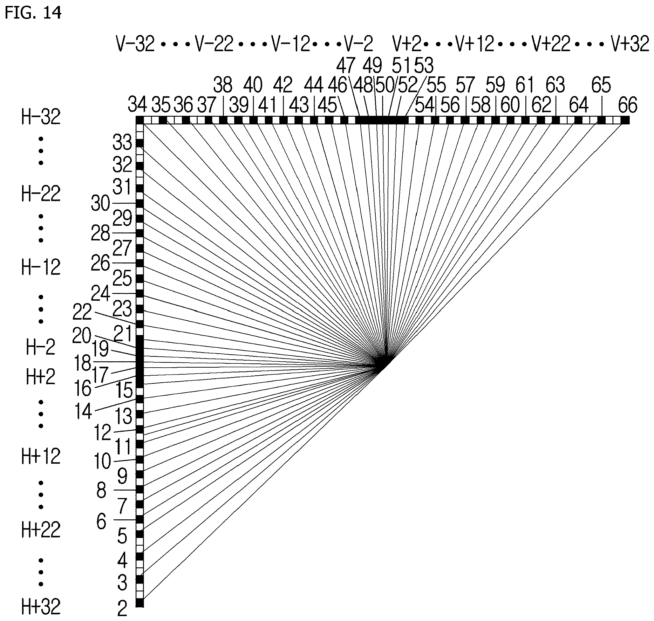

Meanwhile, ALWIP can be used in addition to the intra prediction types described above. The ALWIP(affine linear weighted intra prediction) may also be called LWIP(Linear weighted intra prediction), MWIP(matrix weighted intra prediction), or MIP(matrix based intra prediction). When the ALWIP is applied to the current block, i) perform a matrix vector multiplication procedure using neighboring reference samples on which the averaging procedure has been performed, and iii) further perform a horizontal/vertical interpolation procedure as necessary to derive prediction samples for the current block. The intra prediction modes used for the ALWIP include the LIP, PDPC, MRL, and ISP intra prediction described above, or the intra prediction modes used in normal intra prediction (the intra prediction modes described with reference to FIG. 13 and/or FIG. 14) may be configured differently. The intra prediction mode for ALWIP may be called ALWIP mode, LWIP mode, MWIP mode, or MIP mode. For example, the metrics and offset used in the matrix vector multiplication may be set differently depending on the intra prediction mode for ALWIP. Here, the matrix may be called an (affine) weight matrix, and the offset may be called an (affine) offset vector or (affine) bias vector. The specific ALWIP method will be described later.

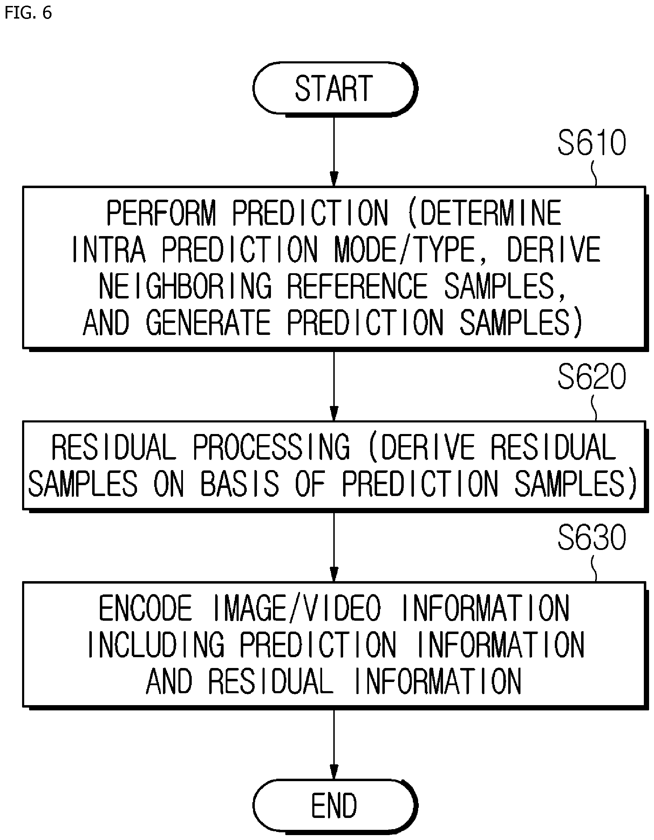

FIG. 6 is a flowchart illustrating an intra prediction based video/image encoding method.

The encoding method of FIG. 6 may be performed by the image encoding apparatus of FIG. 2. Specifically, step S610 may be performed by the intra prediction unit 185 and step S620 may be performed by the residual processor. Specifically, step S620 may be performed by the subtractor 115. Step S630 may be performed by the entropy encoder 190. The prediction information of step S630 may be derived by the intra prediction unit 185, and the residual information of step S630 may be derived by the residual processor. The residual information is information on residual samples. The residual information may include information on quantized transform coefficients for the residual samples. As described above, the residual samples may be derived as transform coefficients through the transformer 120 of the encoding apparatus, and the transform coefficients may be derived as quantized transform coefficients through the quantizer 130. Information on the quantized transform coefficients may be encoded by the entropy encoder 190 through a residual coding procedure.

The encoding apparatus may perform intra prediction with respect to the current block (S610). The encoding apparatus may derive an intra prediction mode/type for the current block, derive neighboring reference samples of the current block, and generate prediction samples in the current block based on the intra prediction mode/type and the neighboring reference samples. Here, a procedure for determining an intra prediction mode/type, a procedure for deriving neighboring reference samples and a procedure for generating prediction samples may be simultaneously performed, or any one procedure may be performed before another procedure.

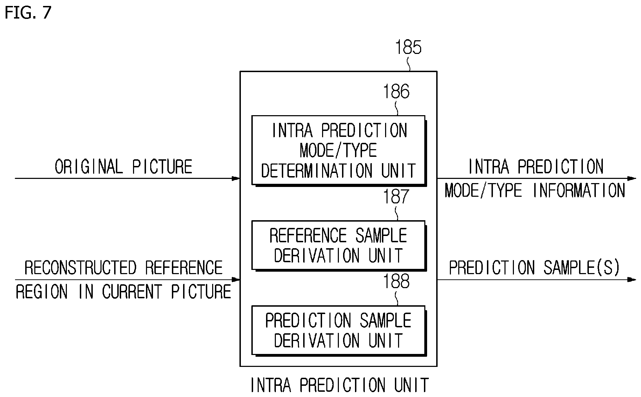

FIG. 7 is a view illustrating a configuration of the intra prediction unit(intra predictor) 185 according to the present disclosure.

As shown in FIG. 7, the intra prediction unit 185 of the encoding apparatus may include an intra prediction mode/type determination unit 186, a reference sample derivation unit 187, a prediction sample derivation unit 188. The intra prediction mode/type determination unit 186 may determine the intra prediction mode/type for the current block, the reference sample derivation unit 187 may derive neighboring reference samples of the current block, and the prediction sample derivation unit 188 may derive the prediction samples of the current block. Meanwhile, although not shown, when the below-described prediction sample filtering procedure is performed, the intra prediction unit 185 may further include a prediction sample filter (not shown).

The image encoding apparatus may determine a mode/type applied to the current block from among a plurality of intra prediction modes/types. The encoding apparatus may compare RD costs of the intra prediction modes/types and determine an optimal intra prediction mode/type for the current block.

Meanwhile, the image encoding apparatus may perform a prediction sample filtering procedure. Predictive sample filtering may be referred to as post filtering. Some or all of the prediction samples may be filtered by the prediction sample filtering procedure. In some cases, the prediction sample filtering procedure may be omitted.

Referring to FIG. 6 again, the image encoding apparatus may generate residual samples for the current block based on prediction samples or filtered prediction samples (S620). The image encoding apparatus may derive the residual samples by subtracting the prediction samples from the original samples of the current block. That is, the image encoding apparatus may derive the residual sample value by subtracting the prediction sample value from the original sample value.

The image encoding apparatus may encode image information including information on intra prediction (prediction information) and residual information of the residual samples (S630). The prediction information may include the intra prediction mode information and the intra prediction type information. The encoding apparatus may output encoded image information in the form of a bitstream. The output bitstream may be transmitted to the decoding apparatus through a storage medium or a network.

The residual information may include a residual coding syntax described below. The encoding apparatus may transform/quantize the residual samples to derive quantized transform coefficients. The residual information may include information on the quantized transform coefficients.

Meanwhile, as described above, the image encoding apparatus may generate a reconstructed picture (including reconstructed samples and a reconstructed block). To this end, the encoding apparatus may perform dequantization/inverse transform with respect to the quantized transform coefficients again to derive (modified) residual samples. The residual samples are transformed/quantized and then dequantized/inversely transformed, in order to derive the same residual samples as the residual samples derived in the decoding apparatus as described above. The image encoding apparatus may generate a reconstructed block including the reconstructed samples for the current block based on the prediction samples and the (modified) residual samples. A reconstructed picture for the current picture may be generated based on the reconstructed block. As described above, an in-loop filtering procedure is further applicable to the reconstructed picture.

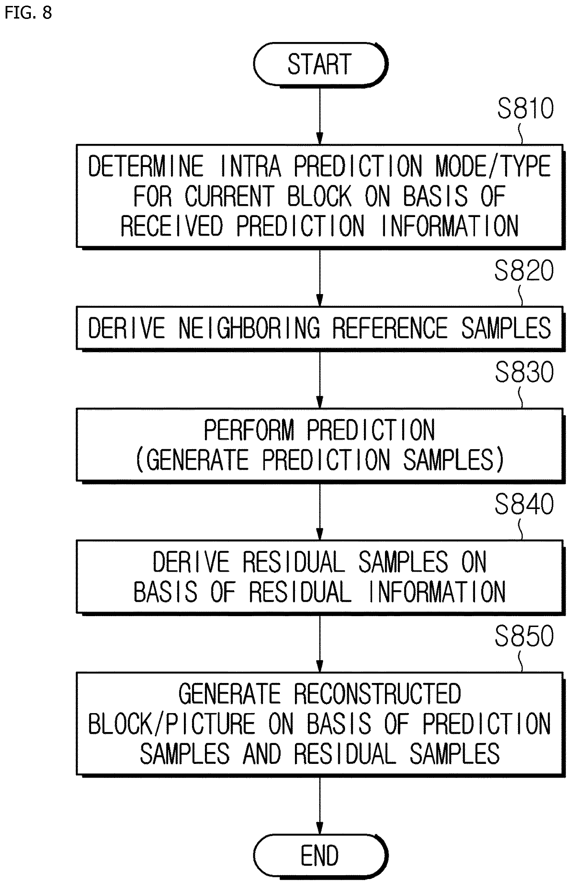

FIG. 8 is a flowchart illustrating an intra prediction based video/image decoding method.

The image decoding apparatus may perform operation corresponding to operation performed by the image encoding apparatus.

The decoding method of FIG. 8 may be performed by the image decoding apparatus of FIG. 3. S810 to S830 may be performed by the intra predictor 265of the decoding apparatus, and the prediction information of S810 and the residual information of S840 may be obtained from the bitstream by the entropy decoder 210 of the decoding apparatus. The residual processor of the image decoding apparatus may derive the residual samples for the current block based on the residual information (S840). Specifically, the dequantizer 220 of the residual processor may perform dequantization based on quantized transform coefficients derived based on the residual information to derive transform coefficients, and the dequantizer 230 of the residual processor may perform inverse transform with respect to the transform coefficients to derive the residual samples for the current block. Step S850 may be performed by the adder 235 or the reconstructor of the decoding apparatus.

Specifically, the image decoding apparatus may derive a intra prediction mode/type for the current block based on the received prediction information (intra prediction mode/type information) (S810). The image decoding apparatus may derive neighboring reference samples of the current block (S820). The image decoding apparatus may generate prediction samples in the current blocks based on the intra prediction mode/type and the neighboring reference samples (S830). In this case, the image decoding apparatus may perform a prediction sample filtering procedure. Predictive sample filtering may be referred to as post filtering. Some or all of the prediction samples may be filtered by the prediction sample filtering procedure. In some cases, the prediction sample filtering procedure may be omitted.

The image decoding apparatus generates residual samples for the current block based on the received residual information (S840). The image decoding apparatus may generate reconstructed samples for the current block based on the prediction samples and the residual samples, and derive a reconstructed block including the reconstructed samples (S850). A reconstructed picture for the current picture may be generated based on the reconstructed block. As described above, the in-loop filtering procedure is further applicable to the reconstructed picture.

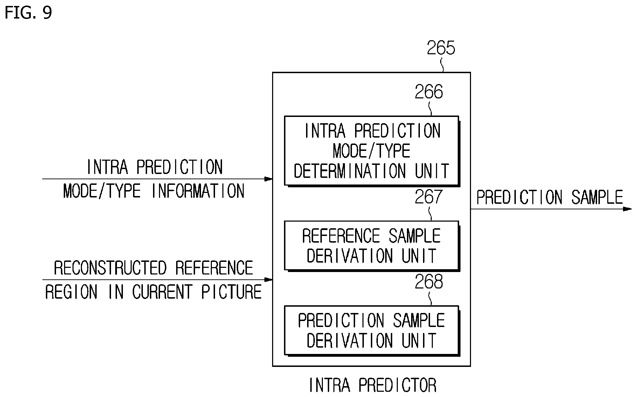

FIG. 9 is a view illustrating a configuration of the intra predictor 265 according to the present disclosure.

As shown in FIG. 9, the intra predictor(intra prediction unit) 265 of the image decoding apparatus may include an intra prediction mode/type determination unit 266, a reference sample derivation unit 267 and a prediction sample derivation unit 268, the intra prediction mode/type determination unit 266 may determine the intra prediction mode/type for the current block based on the intra prediction mode/type information obtained by the intra prediction mode/type determination unit 186 of the image encoding apparatus, the reference sample derivation unit 266 may derive the neighboring reference samples of the current block, and the prediction sample derivation unit 268 may derive the prediction samples of the current block. Meanwhile, although not shown, when the above-described prediction sample filtering procedure is performed, the intra predictor 265 may further include a prediction sample filter (not shown).

The intra prediction mode information may include flag information (e.g., intra_luma_mpm_flag) specifying whether a most probable mode (MPM) or a remaining mode applies to the current block, and, when the MPM applies to the current block, the intra prediction mode information may further include index information (e.g., intra_luma_mpm_idx) specifying one of intra prediction mode candidates (MPM candidates). The intra prediction mode candidates (MPM candidates) may be configured as an MPM candidate list or an MPM list. In addition, when the MPM does not apply to the current block, the intra prediction mode information may further include remaining mode information (e.g., intra_luma_mpm_remainder) specifying one of the remaining intra prediction modes excluding the intra prediction mode candidates (MPM candidates). The decoding apparatus may determine the intra prediction mode of the current block based on the intra prediction mode information.

In addition, the intra prediction technique information may be implemented in various forms. For example, the intra prediction technique information may include intra prediction technique index information specifying one of the intra prediction techniques. As another example, the intra prediction technique information may include at least one of reference sample line information (e.g., intra_luma_ref_idx)) specifying whether the MRL applies to the current block and which reference sample line is used if applied, ISP flag information (e.g., intra_subpartitions_mode_flag) specifying whether the ISP applies to the current block, ISP type information (e.g., intra_subpartitions_split_flag) specifying the split type of subpartitions when the ISP applies, flag information specifying whether PDPC applies or flag information specifying whether LIP applies. In the present disclosure, the ISP flag information may be referred to as an ISP application indicator.

The intra prediction mode information and/or the intra prediction type information may be encoded/decoded through the coding method described in the present disclosure. For example, the intra prediction mode information and/or the intra prediction type information may be encoded/decoded through entropy coding (e.g., CABAC or CAVLC) based on truncated (rice) binary code.

Hereinafter, an intra prediction mode/type determination method according to the present disclosure will be described in greater detail.

When intra prediction is applied to the current block, an intra prediction mode applied to the current block may be determined using intra prediction modes of neighboring blocks. For example, the image decoding apparatus may construct a most probable mode (mpm) list derived based on an intra prediction mode and additional candidate modes of neighboring blocks (e.g., left and/or upper neighboring blocks) of the current block, and select one of mpm candidates in the mpm list based on the received mpm index. Alternatively, the image decoding apparatus may select one of the remaining intra prediction modes not included in the mpm list based on the remaining intra prediction mode information. For example, whether the intra prediction mode applied to the current block is in the mpm candidates (that is, is included in the mpm list) or is in the remaining mode may be indicated based on an mpm flag (e.g., intra_luma_mpm_flag). A value of 1 of the mpm flag may indicate that the intra prediction mode for the current block is in the mpm candidates (mpm list), and a value of 0 of the mpm flag may indicate that the intra prediction mode for the current block is not in mpm candidates (mpm list). The mpm index may be signaled in the form of an mpm_idx or intra_luma_mpm_idx syntax element, and the remaining intra prediction mode information may be signaled in the form of a rem_intra_luma_pred_mode or intra_luma_mpm_remainder syntax element. For example, the remaining intra prediction mode information may indicate one of the remaining intra prediction modes not included in the mpm candidates (mpm list), which are indexed in order of prediction mode numbers, among all intra prediction modes. The intra prediction mode may be an intra prediction mode for a luma component (sample). Hereinafter, the intra prediction mode information may include at least one of the mpm flag (e.g., intra_luma_mpm_flag), the mpm index (e.g., mpm_idx or intra_luma_mpm_idx), or the remaining intra prediction mode information (rem_intra_luma_pred_mode or intra_luma_mpm_remainder). In the present disclosure, the MPM list may be called various terms such as an MPM candidate list and candModeList.

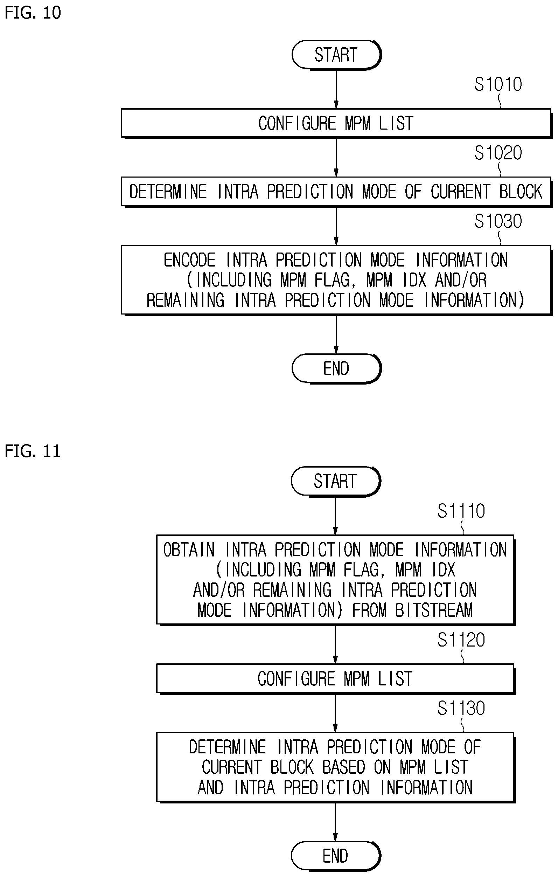

FIG. 10 is a flowchart illustrating an intra prediction mode signaling procedure in an image encoding apparatus.

Referring to FIG. 10, the image encoding apparatus may configure an MPM list for a current block (S1010). The MPM list may include candidate intra prediction modes (MPM candidates) that are highly likely to be applied to the current block. The MPM list may include intra prediction modes of neighboring blocks or may further include specific intra prediction modes according to a predetermined method.

The image encoding apparatus may determine an intra prediction mode of the current block (S1020). The image encoding apparatus may perform prediction based on various intra prediction modes, and may determine an optimal intra prediction mode by performing rate-distortion optimization (RDO) based on the prediction. In this case, the image encoding apparatus may determine the optimal intra prediction mode using only the MPM candidates included in the MPM list, or may determine the optimal intra prediction mode using the remaining intra prediction modes as well as the MPM candidates included in the MPM list. Specifically, for example, if the intra prediction type of the current block is a specific type (e.g., LIP, MRL, or ISP) rather than a normal intra prediction type, the image encoding apparatus may determine the optimal intra prediction mode using only the MPM candidates. That is, in this case, the intra prediction mode for the current block may be determined only from among the MPM candidates, and in this case, the mpm flag may not be encoded/signaled. In the case of the specific type, the image decoding apparatus may estimate that the mpm flag is 1 without separately receiving the mpm flag.

Meanwhile, in general, when the intra prediction mode of the current block is one of MPM candidates in the MPM list, the image encoding apparatus may generate an mpm index indicating one of the MPM candidates. If the intra prediction mode of the current block is not included in the MPM list, remaining intra prediction mode information indicating the same mode as the intra prediction mode of the current block among remaining intra prediction modes not included in the MPM list may be generated.

The image encoding apparatus may encode the intra prediction mode information and output it in the form of a bitstream (S1030). The intra prediction mode information may include the aforementioned mpm flag, mpm index, and/or remaining intra prediction mode information. In general, the mpm index and the remaining intra prediction mode information have an alternative relationship and are not signaled simultaneously in indicating an intra prediction mode for one block. That is, the mpm index may be signaled when the mpm flag value is 1, and the remaining intra prediction mode information may be signaled when the mpm flag value is 0. However, as described above, when a specific intra prediction type is applied to the current block, the mpm flag is not signaled and its value is inferred to be 1, and only the mpm index may be signaled. That is, in this case, the intra prediction mode information may include only the mpm index.

Although, in the example shown in FIG. 10 , S1020 is shown to be performed after S1010, this is an example, and S1020 may be performed before or simultaneously with S1010.

FIG. 11 is a flowchart illustrating an intra prediction mode determination procedure in an image decoding apparatus.

The image decoding apparatus may determine the intra prediction mode of the current block based on the intra prediction mode information determined and signaled by the image encoding apparatus.

Referring to FIG. 11, the image decoding apparatus may obtain intra prediction mode information from a bitstream (S1110). As described above, the intra prediction mode information may include at least one of an mpm flag, an mpm index, or a remaining intra prediction mode.

The image decoding apparatus may configure an MPM list (S1120). The MPM list is configure identically to the MPM list configured in the image encoding apparatus. That is, the MPM list may include intra prediction modes of neighboring blocks or may further include specific intra prediction modes according to a predetermined method.

Although, in the example shown in FIG. 11, S1120 is shown to be performed after S1110, this is an example, and S1120 may be performed before or simultaneously with S1110.

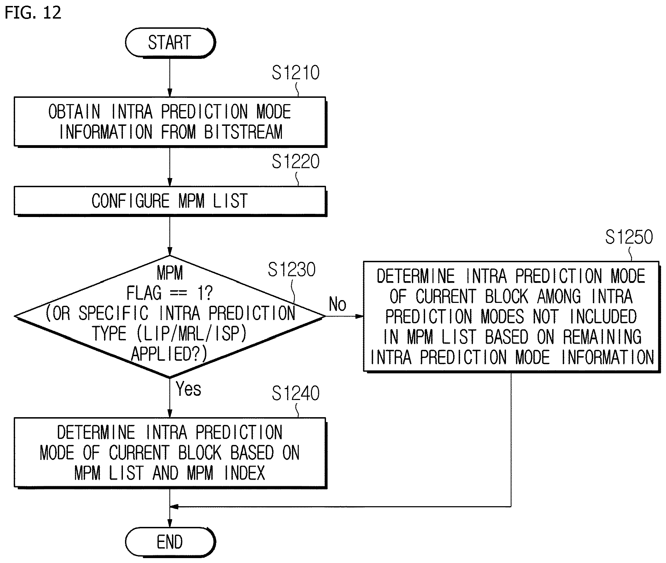

The image decoding apparatus determines an intra prediction mode of a current block based on the MPM list and the intra prediction mode information (S1130). Step S1130 will be described in more detail with reference to FIG. 12.

FIG. 12 is a flowchart illustrating an intra prediction mode derivation procedure in greater detail.

Steps S1210 and S1220 of FIG. 12 may correspond to steps S1110 and S1120 of FIG. 11, respectively. Therefore, detailed descriptions of steps S1210 and S1220 will be omitted.

The image decoding apparatus may obtain intra prediction mode information from a bitstream, configure an MPM list (S1210 and S1220), and determine a predetermined condition (S1230). Specifically, as shown in FIG. 12, when the value of the mpm flag is 1 (Yes in S1230), the image decoding apparatus may derive a candidate indicated by the mpm index among MPM candidates in the MPM list as an intra prediction mode of the current block (S1240). As another example, when the value of the mpm flag is 0 (No in S1230), the image decoding apparatus may derive the intra prediction mode indicated by the remaining intra prediction mode information among the remaining intra prediction modes not included in the MPM list as the intra prediction mode of the current block (S1250). Meanwhile, as another example, when the intra prediction type of the current block is a specific type (e.g., LIP, MRL, or ISP) (Yes in S1230), the image decoding apparatus may derive a candidate indicated by the mpm index in the MPM list as the intra prediction mode of the current block without checking the mpm flag (S1240).

Meanwhile, when intra prediction is performed on the current block, prediction on the luma component block (luma block) and prediction on the chroma component block (chroma block) of the current block may be performed. In this case, the intra prediction mode for the chroma component may be set separately from the intra prediction mode for the luma component (luma block).

For example, the intra prediction mode for the chroma component may be indicated based on intra chroma prediction mode information, and the intra chroma prediction mode information may be signaled in the form of an intra_chroma_pred_mode syntax element. As an example, the intra chroma prediction mode information may indicate one of candidate modes including at least one of a planar mode, a DC mode, a vertical mode, a horizontal mode, a derived mode (DM), L_CCLM, T_CCLM, or LT_CCLM modes. DM may also be called direct mode. CCLM may be called LM. CCLM may be called LM.

FIG. 13 is a diagram for explaining a procedure for deriving a prediction sample for a chroma component. More specifically, it is a diagram for explaining an embodiment of a DM mode. Meanwhile, DM and CCLM are dependent intra prediction modes for predicting a chroma block using luma block information. The DM may indicate a mode in which the same intra prediction mode as the intra prediction mode for the luma component is applied as the intra prediction mode for the chroma component. In addition, the CCLM may indicate an intra prediction mode in which reconstructed samples of the luma block are subsampled in a process of generating the prediction block for the chroma block and then samples derived by applying CCLM parameters $\alpha$ and $\beta$ to the subsampled samples are used as the prediction samples of the chroma block.

For example, Multiple Direct Modes (MDM) may be applied to the current chroma block. Multiple Direct mode is used by extending the existing single mode, DM mode, into multiple modes. That is, when configuring the intra prediction mode of the chroma image, multiple DM modes are selected as follows.

- intra prediction mode of CR, TL, TR, BL, BR (see FIG. 1.5.2-1) position of collocated luma block
- intra prediction mode of L, A, BL, AR, AL blocks which are the neighboring blocks of the current color block
- PLANAR and DC modes
- the previously selected angular mode -1 or +1 angular mode
- Vertical, Horizontal, #2, #34, #66, #10, and # 26 modes (in case of 65-direction mode)

- When five prediction modes are not selected, the previously selected mode are copied and selected

Also, a cross-component linear model (CCLM) mode may be applied to the current chroma block. The CCLM mode is an intra prediction mode using correlation between a luma block and a chroma block corresponding to the luma block, and may indicate a mode in which a linear model may be derived based on neighboring samples of the luma block and neighboring samples of the chroma block and prediction samples of the chroma block are derived based on the linear model and the reconstructed samples of the luma block. Specifically, when the CCLM mode is applied to the current chroma block, parameters for the linear model may be derived based on neighboring samples used for intra prediction of the current chroma block and neighboring samples used for intra prediction of the current luma block.

For example, the linear model may be expressed based on the following equation.

[Equation 1]

$$pred_C(i,j) = \alpha \cdot rec_L{}'(i,j) + \beta$$

where, predc(i,j) may indicate a prediction sample of (i,j) coordinates of the current chroma block in the current CU, and recL'(i,j) may indicate a reconstructed sample of (i, j) coordinates of the current luma block in the CU. In addition, recL'(i,j) may indicate a down-sampled reconstructed sample of the current luma block.

Table 2 below shows a mapping table for deriving an intra chroma prediction mode when CCLM is not available, and Table 3 below shows a mapping table for deriving an intra prediction mode when CCLM is available. As shown in the tables, the intra chroma prediction mode may be determined based on an intra luma prediction mode for the current block or a luma block (e.g., when DUAL_TREE is applied) covering the bottom-right center sample of the chroma block and the value of signaled intra chroma prediction mode (intra_chroma_pred_mode) information.

[Table 2]

| intra_chroma_pred_mode[ xCb ][ yCb ] | lumaIntraPredMode | | | | |
|---|---|---|---|---|---|
| | 0 | 50 | 18 | 1 | X(0 <= X <= 66) |
| 0 | 66 | 0 | 0 | 0 | 0 |
| 1 | 50 | 66 | 50 | 50 | 50 |
| 2 | 18 | 18 | 66 | 18 | 18 |
| 3 | 1 | 1 | 1 | 66 | 1 |
| 4 | 0 | 50 | 18 | 1 | X |

[Table 3]

| intra chroina_pred _mode[ xCb ][ yCb ] | lumaIntraPredMode | | | | |
|---|---|---|---|---|---|
| | 0 | 50 | 18 | 1 | X(0 <= X <= 66) |
| 0 | 66 | 0 | 0 | 0 | 0 |
| 1 | 50 | 66 | 50 | 50 | 50 |
| 2 | 18 | 18 | 66 | 18 | 18 |
| 3 | 1 | 1 | 1 | 66 | 1 |
| 4 | 81 | 81 | 81 | 81 | 81 |
| 5 | 82 | 82 | 82 | 82 | 82 |
| 6 | 83 | 83 | 83 | 83 | 83 |
| 7 | 0 | 50 | 18 | 1 | X |

FIG. 14 is a view illustrating an intra prediction direction according to an embodiment of the present disclosure.

An intra prediction mode may include two non-directional intra prediction modes and 33 directional intra prediction modes. The non-directional intra prediction modes may include a planar mode and a DC mode, and the directional intra prediction modes may include intra prediction modes #2 to #34. The planar intra prediction mode may be called a planar mode and the DC intra prediction mode may be called a DC mode.

Alternatively, in order to capture any edge direction presented in natural video, as shown in FIG. 14, the intra prediction mode may include two non-directional intra prediction modes and 65 extended directional intra prediction modes. The non-directional intra prediction modes may include a planar prediction mode and a DC prediction mode, and the directional intra prediction modes may include intra prediction modes #2 to #66. The extended intra prediction mode is applicable to blocks having all sizes and to both a luma component (luma block) and a chroma component (chroma block).

Alternatively, the intra prediction mode may include two non-directional intra prediction modes and 129 directional intra prediction modes. The non-directional intra prediction modes may include a planar prediction mode and a DC prediction mode, and the directional intra prediction modes may include intra prediction modes #2 to #130.

Meanwhile, the intra prediction mode may further include a cross-component linear model (CCLM) mode for chroma samples in addition to the above-described intra prediction modes. The CCLM mode may be split into L_CCLM, T_CCLM, LT_CCLM according to whether left samples, top samples or both thereof is considered for LM parameter derivation and may apply only to a chroma component.

The intra prediction mode may be indexed, for example, as shown in Table 2 below.

Table 4

| Intra prediction mode | Associated name |
|---|---|
| 0 | INTRA_PLANAR |
| 1 | INTRA_DC |
| 2..66 | INTRA _ANGULAR2..INTRA _ ANGULAR66 |
| 81..83 | INTRA_LT_CCLM, INTRA_L_CCLM, INTRA_T_CCLM |

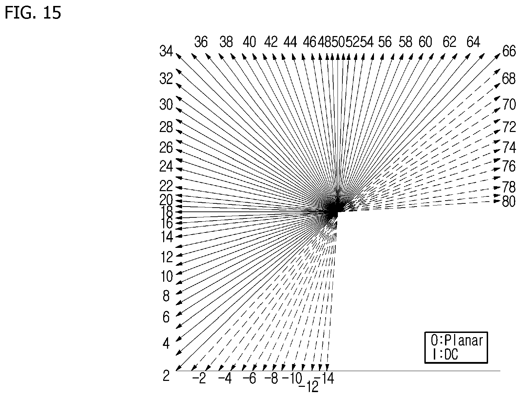

FIG. 15 is a view illustrating an intra prediction direction according to another embodiment of the present disclosure. In FIG. 15, a dotted-line direction shows a wide-angle mode applying only to a non-square block. As shown in FIG. 15, in order to capture any edge direction presented in natural video, the intra prediction mode according to an embodiment may include two non-directional intra prediction modes and 93 directional intra prediction modes. The non-directional intra prediction modes may include a planar prediction mode and a DC prediction mode, and the directional intra prediction modes may include intra prediction modes #2 to #80 to #-1 to #-14, as denoted by arrow of FIG. 15. The planar mode may be denoted by INTRA_PLANAR, and the DC mode may be denoted by INTRA_DC. In addition, the directional intra prediction mode may be denoted by INTRA_ANGULAR-14 to INTRA_ANGULAR-1 and INTRA_ANGULAR2 to INTRA_ANGULAR80.

Meanwhile, the MPM list may be configured to include N MPMs. In this case, N may be 5 or 6.

In order to construct the MPM list, three types of modes described below may be considered.

- Default intra modes
- Neighbour intra modes
- Derived intra modes

For the above neighbor intra modes, two neighboring blocks may be considered: a left neighboring block (A) and a top neighboring block (B).

In addition, the following initialized default MPM may be considered to configure the MPM list.

Default 6 MPM modes = {A, Planar (0) or DC (1), Vertical (50), HOR (18), VER - 4 (46), VER + 4 (54)}

An MPM list may be configured by performing a pruning process on the two neighbor intra modes. If the two neighbor intra modes are equal to each other and the neighbor intra mode is greater than a DC (1) mode, the MPM list may include {A, Planar, DC} modes and include 3 derived intra modes. The three derived intra modes may be obtained by adding a predetermined offset value to the neighbor intra modes and/or performing a modulo operation. When the two neighbor intra modes are different from each other, the two neighbor intra modes are assigned to a first MPM mode and a second MPM mode, and the remaining four MPM modes may be derived from default modes and/or neighbor intra modes. In the process of generating the MPM list, a pruning process may be performed to prevent the same mode from overlap in the MPM list. Truncated Binary Code (TBC) may be used for entropy encoding of modes other than the MPM mode.

**Position dependent intra prediction (PDPC)**

PDPC may indicate an intra prediction method of deriving filtered reference samples by performing filtering based on a filter for the PDPC, deriving a temporary prediction sample of the current block based on the intra prediction mode of the current block and the filtered reference samples, and deriving a prediction sample of the current block by performing a weighted sum of at least one reference sample derived according to the intra prediction mode among existing reference samples, that is, unfiltered reference samples, and the temporary prediction sample. Here, the predefined filter may be one of five 7-tap filters. Alternatively, the predefined filter may be one of a 3-tap filter, a 5-tap filter, and a 7-tap filter. The 3-tap filter, the 5-tap filter, and the 7-tap filter may indicate a filter having 3 filter coefficients, a filter having 5 filter coefficients, and a filter having 7 filter coefficients, respectively.

For example, the prediction result of the intra planar mode may be further modified by the PDPC.

Alternatively, for example, the PDPC is an intra planar mode, an intra DC mode, a horizontal intra prediction mode, a vertical intra prediction mode, a bottom-left intra prediction mode (i.e., #2 intra prediction mode), eight directional intra prediction modes adjacent to the bottom-left intra prediction mode, a top-right intra prediction mode and eight directional intra prediction modes adjacent to the top-right intra prediction mode, without separate signaling.

Specifically, when the PDPC is applied, a prediction sample of (x,y) coordinates predicted based on a linear combination of reference samples and an intra prediction mode may be derived as in the following equation.

[Equation 2]

$$pred(x,y)=(wL{\times}R\text{-}1,y + wT{\times}Rx,\text{-}1 - wTL \times R\text{-}1,\text{-}1+(64 - wL - wT+wTL){\times}pred(x,y) + 32 )>>6$$

where, $R_{x,\text{-}1}$ and $R_{\text{-}1,y}$ denote upper and left reference samples located at the upper and left sides of the current sample of (x, y) coordinates, and $R_{\text{-}1,\text{-}1}$ denotes a top-left reference sample located at the top-left corner of the current block.

Meanwhile, when PDPC is applied to intra planar mode, intra DC mode, horizontal intra prediction mode, and vertical intra prediction mode, additional boundary filters such as a DC mode boundary filter or a vertical/horizontal mode edge filter of the existing HEVC may not be needed.

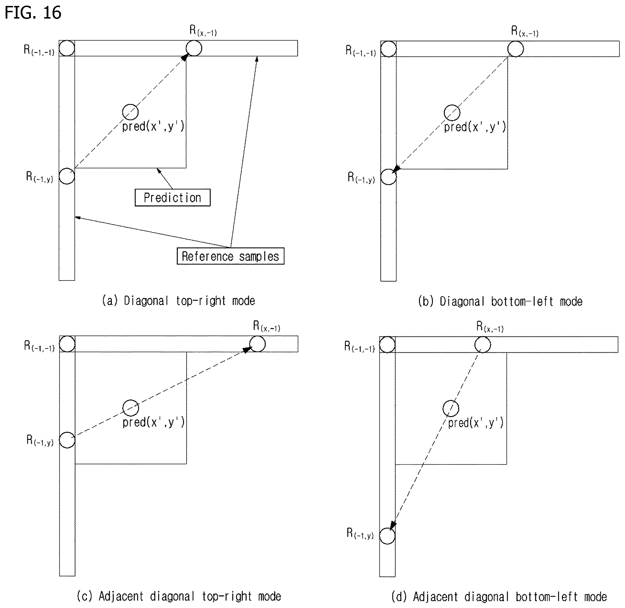

FIG. 16 is a diagram for explaining a position dependent intra prediction (PDPC) process according to the present disclosure. FIG. 16 shows reference samples ($R_{x,\text{-}1}$ , $R_{\text{-}1,y}$, $R_{\text{-}1,\text{-}1}$) defined in PDPC applied to various prediction modes.

Meanwhile, the weights of the PDPC may be derived based on prediction modes. Weights of the PDPC may be derived as shown in the following table.

Table 9

| Prediction modes | wT | wL | wTL |
|---|---|---|---|
| Diagonal top-right | 16 >> ((*y'*<<1) >> *shift*) | 16 >> ((*x'*<<1) >> *shift*) | 0 |
| Diagonal bottom-left | 16 >> ((*y'*<<1) >> *shift*) | 16 >> ((*x'*<<1) >> *shift*) | 0 |
| Adjacent diagonal top-right | 32 >> ((*y'*<<1) >> *shift*) | 0 | 0 |
| Adjacent diagonal bottom-left | 0 | 32 >> ((*x'*<<1) >> *shift*) | 0 |

In position dependent intra prediction combination (PDPC), a prediction sample is generated using a reference sample according to a prediction mode, and then the prediction sample is improved using a neighboring reference sample. Instead of applying PDPC to all intra prediction modes, the PDPC is restrictively applicable to Planar, DC, 2 (bottom-right mode), VDIA (top-left mode), Hor (horizontal mode), Ver (vertical mode), neighbor modes (#3 to #10 modes) of mode 2, and neighbor modes (#58 to #65 mode) of VDIA mode based on 65 directional intra prediction modes. In addition, instead of being applied to all prediction samples within a block to be currently encoded, it may be applied variably considering the size of a block.

**Multi-Reference Line(MRL) intra prediction**

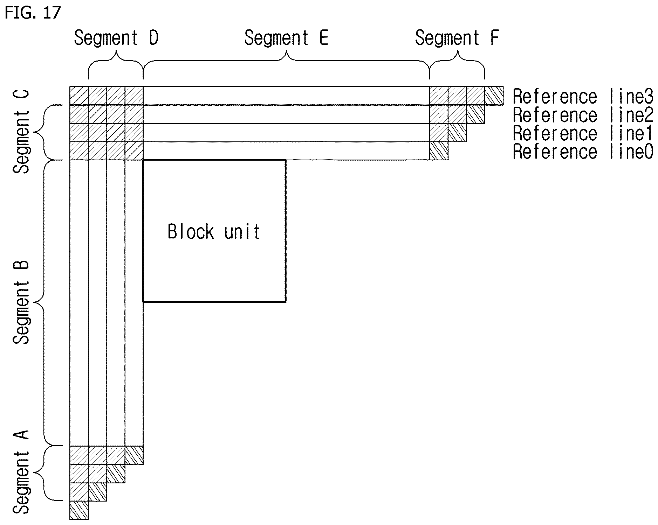

In the conventional intra prediction, only the neighboring samples of the top first line and the left first line of the current block were used as reference samples for intra prediction. However, in the multiple-reference line (MRL) method, intra prediction may be performed using neighboring samples located on a sample line separated by one to three samples from the upper and/or left side of the current block as reference samples. FIG. 17 is a diagram for explaining a Multi-Reference Line (MRL) process according to the present disclosure. More specifically, FIG. 17 shows an example of the multiple reference line, where the multiple reference line index (e.g., mrl_idx) indicates which line is used for intra prediction with respect to the current block. Direct neighbor (nearest) reference samples on reference line 0 and extended reference samples on reference line 1 may be used in MRL intra prediction.

Table 10 shows an example of a signaling structure of a syntax element related to MRL.

Table 10

| |
|---|
| coding_unit( x0, y0, cbWidth, cbHeight, treeType) { |
| if( slice_type != I) { |
| **cu_skip_flag[** x0 ][ y0 ] |
| if( cu_skip_flag[ x0 ][ y0 ] = = 0 ) |
| **pred_mode_flag** |
| } |
| if( CuPredMode[ x0 ][ y0 ] = = MODE_INTRA) { |
| if( treeType = = SINGLE_TREE ‖ treeType = = DUAL_TREE_LUMA ) { |
| if( (y0 % CtbSizeY) > 0 ) |
| **intra_luma_ref_idx[** x0 ][ y0 ] ... |
| if (intra_luma_ref idx[ x0 ][ y0 ] = = 0) |
| **intra_luma_mpm_flag[** x0 ][ y0 ] |
| if( intra_luma_mpm_flag[ x0 ][ y0 ]) |
| **intra_luma_mpm_idx**[ x0 ][ y0 ] |
| Else |
| **intra_luma_mpm_remainder**[ x0 ][ y0 ] |
| } |
| ... |
| } |

In Table 10 above, intra_luma_ref_idx[ x0 ][ y0 ] designates an intra reference line index IntraLumaRefLineIdx[ x0 ][ y0 ]. If intra_luma_ref_idx[ x0 ][ y0 ] does not exist, its value may be inferred to be 0.

intra_luma_ref_idx may also be referred to as an (intra) reference sample line index or mrl_idx. In addition, intra_luma_ref_idx may also be referred to as intra_luma_ref_line_idx.

Table 11

| intra_luma_ref_idx[ x0 ][ y0 ] | IntraLumaRefLineIdx[ x0 ][ y0 ] |
|---|---|
| 0 | 0 |
| 1 | 1 |
| 2 | 3 |

Table 11 shows an example of a value of IntraLumaRefLineIdx[ x0 ][ y0 ] based on intra_luma_ref_idx[ x0 ][ y0 ].

In addition, if intra_luma_mpm_flag does not exist in Table 10, its value may be inferred to be 1. intra_luma_mpm_flag having a value of 1 may mean that the intra prediction mode of the current coding block is selected from the MPM list.

Referring to Table 10, only when intra_luma_ref_idx is 0, intra_luma_mpm_flag is signaled. Accordingly, when intra_luma_ref_idx is not 0, intra_luma_mpm_flag is not signaled and its value may be inferred to be 1. That is, when a reference sample for intra prediction exists in a reference line other than reference line 0, the intra prediction mode of the current coding block may be selected from the MPM list.

MRL may be disabled for blocks of the first line (row) in the CTU. This is to prevent extended reference lines outside the current CTU line from being used. In addition, when the aforementioned additional reference line is used, the aforementioned PDPC may be disabled.

### Intra Sub-Partitions (ISP) prediction

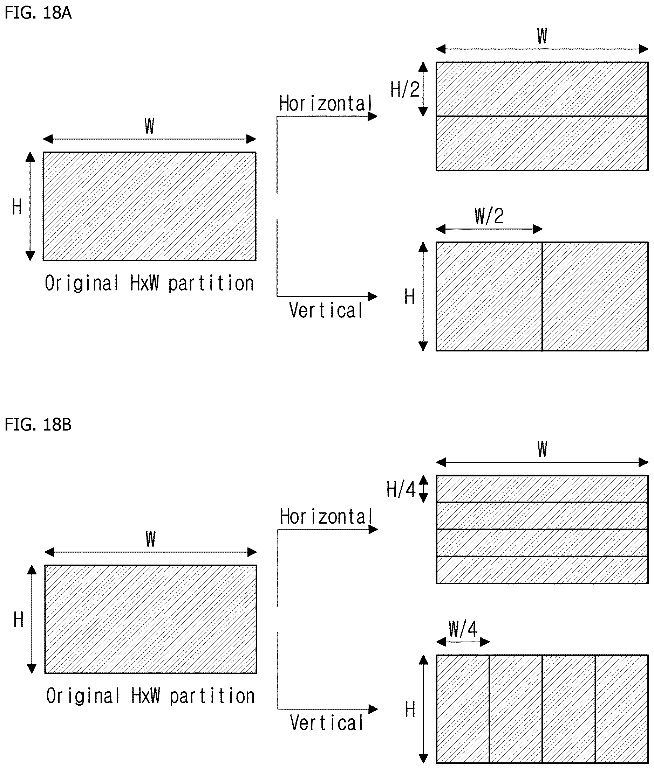

In conventional intra prediction, encoding was performed without partitioning by considering a block to be currently encoded as one coding unit. However, the intra sub-partitions (ISP) prediction method performs intra prediction encoding by partitioning a block to be currently encoded in a horizontal or vertical direction. FIGS. 18a and 18b are diagrams for explaining an Intra Sub-Partitions (ISP) process according to the present disclosure. At this time, encoding/decoding is performed in units of partitioned blocks to generate a reconstructed block, and the reconstructed block is used as a reference block for the next partitioned block. Current intra sub-partitions (ISP) are partitioned according to the block size as shown in Table 12.

[Table 12]

| Block size (CU) | Number of partitions |
|---|---|
| 4x4 | not available |
| 4×8, 8x4 | 2 |
| All other cases | 4 |

More specifically, FIG. 18a is a diagram for explaining a partitioning example of 4x8 and 8x4 blocks (CUs), and FIG. 18b is a diagram for explaining a partitioning example of all blocks except for 4x8, 8x4, and 4x4 blocks (CUs).

[Table 13]

| Block Size | Coefficient group Size |
|---|---|
| $1 \times N, N \geq 16$ | $1 \times 16$ |
| $N \times 1, N \geq 16$ | $16 \times 1$ |
| $2 \times N, N \geq 8$ | $2 \times 8$ |
| $N \times 2, N \geq 8$ | $8 \times 2$ |
| All other possible $M \times N$ cases | $4 \times 4$ |

In the intra sub-partition method, an MPM list is generated according to each partitioning method (horizontal partitioning and vertical partitioning) to reduce coding complexity, and an optimal mode is generated by comparing appropriate prediction modes among prediction modes in the generated MPM list from a rate distortion optimization (RDO) point of view. In addition, when multiple reference line (MRL) intra prediction is used, the aforementioned intra sub-partition method cannot be used. That is, the intra sub-partition method is applied only when the 0-th reference line is used (i.e., intra_luma_ref_idx value is 0). In addition, when the above-described intra sub-partition method is used, the above-described PDPC cannot be used.

In the intra sub-partition method, whether or not intra sub-partitions are applied is transmitted in units of blocks, and if the current block uses intra sub-partitions (intra_subpartitions_mode_flag), information on horizontal or vertical splitting (intra_subpartitions_split_flag) is encoded/decoded.

When the intra sub-partition method is applied, the intra prediction mode for the current block is equally applied to the sub-partitions, and intra-prediction performance can be improved by deriving and using neighboring reference samples in units of the sub-partitions. That is, when the intra sub-partition method is applied, the residual sample processing procedure is performed in units of sub-partitions. In other words, intra prediction samples are derived for each sub-partition, and residual signals (residual samples) for the corresponding sub-partition are added to obtain reconstructed samples. The residual signal (residual samples) may be derived through an inverse quantization/inverse transform procedure based on residual information (quantized transform coefficient information or residual coding syntax) in the above-described bitstream. That is, prediction samples and residual samples are derived for the first sub-partition, and based on them, reconstructed samples for the first sub-partition may be derived. In this case, when the prediction samples for the second sub-partition are derived, some of the reconstructed samples in the first sub-partition (e.g., left or upper neighboring reference samples of the second sub-partition) may be used as neighboring reference samples for the second sub-partition. Similarly, prediction samples and residual samples are derived for the second sub-partition, and based on them, reconstructed samples for the second sub-partition may be derived. In this case, when deriving prediction samples for the third sub-partition, some of the reconstructed samples in the second sub-partition (e.g., left or upper neighboring reference samples of the third sub-partition) may be used as neighboring reference samples for the third sub-partition. The same is true of the below.

Hereinafter, transform/inverse transform of a residual signal according to the present disclosure will be described in detail.

As described above, the image encoding apparatus may derive a residual block (residual samples) based on a block (prediction blocks) predicted through intra/inter/IBC prediction, and derive quantized transform coefficients by applying transform and quantization to the derived residual samples. Information on the quantized transform coefficients (residual information) may be included and encoded in a residual coding syntax and output in the form of a bitstream. The image decoding apparatus may acquire and decode information on the quantized transform coefficients (residual information) from the bitstream to derive quantized transform coefficients. The image decoding apparatus may derive residual samples through dequantization/inverse transform based on the quantized transform coefficients. As described above, at least one of quantization/dequantization and/or transform/inverse transform may be skipped. When transform/inverse transform is skipped, the transform coefficient may be referred to as a coefficient or a residual coefficient or may still be referred to a transform coefficient for uniformity of expression. Whether transform/inverse transform is skipped may be signaled based on transform_skip_flag.

Transform/inverse transform may be performed based on transform kernel(s). For example, a multiple transform selection (MTS) scheme is applicable according to the present disclosure. In this case, some of a plurality of transform kernel sets may be selected and applied to a current block. A transform kernel may be referred to as various terms such as a transform matrix or a transform type. For example, the transform kernel set may indicate a combination of a vertical-direction transform kernel (vertical transform kernel) and a horizontal-direction transform kernel (horizontal transform kernel). For example, MTS index information (e.g., tu_mts_idx syntax element) may be generated/encoded in the image encoding apparatus and signaled to the image decoding apparatus to indicate one of the transform kernel sets. For example, the transform kernel set according to the value of MTS index information may be shown in Table 7.

Table 7]

| tu_mts_idx[ x0 ][ y0 ] | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

In Table 7, tu_mts_idx denotes MTS index information, and trTypeHor and trTypeVer denote a horizontal transform kernel and a vertical transform kernel, respectively.

The transform kernel set may be determined based on, for example, cu sbt_horizontal flag and cu_sbt_pos_flag. When cu sbt_horizontal flag has a value of 1, it indicates that the current block is split into two transform blocks in the horizontal direction, and when it has a value of 0, it indicates that the current block is split into two transform blocks in the vertical direction. When cu_sbt_pos_flag has a value of 1, it indicates that tu_cbf_luma, tu_cbf_cb, and tu_cbf_cr for the first transform block of the current block do not exist in the bitstream, and when it has a value of 0, tu_cbf_luma, tu_cbf_cb and tu_cbf_cr for the second transform block of the current block does not exist in the bitstream. tu_cbf_luma, tu_cbf_cb, and tu_cbf_cr may be syntax elements indicating whether a transform block of a corresponding color component (luma, cb, cr) includes at least one non-zero transform coefficient. For example, when tu_cbf_luma has a value of 1, it may indicate that the corresponding luma transform block includes at least one non-zero transform coefficient. As described above, trTypeHor and trTypeVer may be determined according to Table 8 below based on cu sbt_horizontal flag and cu_sbt_pos_flag.

[Table 8]

| cu_sbt_horizontal_flag | cu_sbt_pos_flag | trTypeHor | trTypeVer |
|---|---|---|---|
| 0 | 0 | 2 | 1 |
| 0 | 1 | 1 | 1 |
| 1 | 0 | 1 | 2 |

(continued)

| cu_sbt_horizontal_flag | cu_sbt_pos_flag | trTypeHor | trTypeVer |
|---|---|---|---|
| 1 | 1 | 1 | 1 |

In Table 8, for example, when cu sbt_horizontal flag is 0 and cu_sbt_pos_flag is 1, trTpeHor and trTypeVer may be determined to be 1, respectively. The transform kernel set may be determined based on, for example, an intra prediction mode for the current block. In the present disclosure, the MTS-based transform is applied to a primary transform, and additionally, a secondary transform may be further applied. The secondary transform may be applied only to coefficients in the top-left wxh region of the coefficient block to which the primary transform is applied, and may be referred to as a reduced secondary transform (RST). For example, w and/or h may be 4 or 8. In transform, the first transform and the second transform may be sequentially applied to the residual block, and in the inverse transform, the second inverse transform and the first inverse transform may be sequentially applied to transform coefficients. The secondary transform (RST transform) may be referred to as a low frequency coefficients transform (LFC transform or LFCT). The secondary inverse transform may be referred to as an inverse LFC transform or an inverse LFCT.

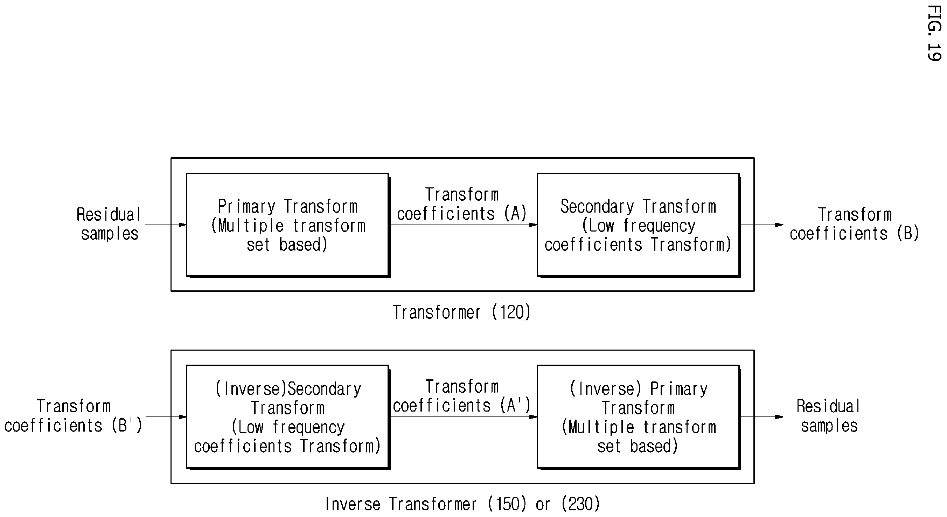

FIG. 19 is a diagram for explaining a transform method applied to a residual block.

As shown in FIG. 19, the transform unit 120 of the image encoding apparatus may receive residual samples, perform a primary transform to generate transform coefficients (A), and perform a secondary transform to generate transform coefficients (B). The inverse transform unit 150 of the image encoding apparatus and the inverse transform unit 230 of the image decoding apparatus may receive transform coefficients (B), perform inverse secondary transform to generate transform coefficients (A), and perform an inverse primary transform to generate residual samples. As described above, the primary transform and the inverse primary transform may be performed based on MTS. In addition, the secondary transform and the inverse secondary transform may be performed only for a low frequency region (a top-left wxh region of a block).

Transform/inverse transform may be performed in units of CU (coding unit) or TU (transform unit). That is, transform/inverse transform is applicable to residual samples in a CU or residual samples in a TU. A CU size may be equal to a TU size or a plurality of TUs may be present in a CU region. Meanwhile, the CU size may generally indicate a luma component (sample) CB (coding block) size. The TU size may generally indicate a luma component (sample) TB (transform block) size. A chroma component (sample) CB or TB size may be derived based on the luma component (sample) CB or TB size according to a component ratio according to a color format (chroma format) (e.g., 4:4:4, 4:2:2, 4:2:0 , etc.). The TU size may be derived based on maxTbSize. In this case, maxTbSize may mean a transformable maximum size. For example, when the CU size is greater than maxTbSize, a plurality of TUs (TBs) of maxTbSize may be derived from the CU and transform/inverse transform may be performed in units of TU (TB). maxTbSize may be considered to determine whether to apply various intra prediction types such as ISP. Information on maxTbSize may be predetermined or may be generated and encoded in the image encoding apparatus and signaled to the image decoding apparatus.

Hereinafter, the secondary transform/inverse secondary transform will be described in greater detail.

The secondary transform of the present disclosure may be a mode-dependent non-separable secondary transform (MDNSST). To reduce complexity, MDNSST may be applied only to coefficients in the low-frequency region after the first transform is performed. When both the width W and height H of the current transform coefficient block are 8 or more, an 8x8 non-separable secondary transform may be applied to the top-left 8x8 region of the current transform coefficient block. Otherwise, if W or H is less than 8, a 4x4 non-separable secondary transform may be applied to the top-left min(8, W) × min(8, H) region of the current transform coefficient block. A total of 35x3 non-separable secondary transforms are available for 4x4 blocks and 8x8 blocks. Here, 35 is the number of transform sets specified by the intra prediction mode, and 3 means the number of NSST candidates (candidate kernels) for each intra prediction mode. A mapping relationship between an intra prediction mode and a corresponding transform set may be shown in Table 9, for example.

[Table 14]

| intra mode | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 |
|---|---|---|---|---|---|---|---|---|---|---|---|---|---|---|---|---|---|---|---|---|---|---|---|---|---|---|---|---|---|---|---|---|---|---|
| set | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 |
| intra mode | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 | 64 | 65 | 66 | 67 (LM) |
| set | 34 | 33 | 32 | 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | NULL |

In Table 14, for example, if the intra prediction mode is 0, the transform set for secondary transform (inverse transform) may be Set 0. When a transform set is determined based on the intra prediction mode, it is necessary to specify one of a plurality of transform kernels included in the transform set. To this end, an index (NSST Idx) may be coded and signaled. When secondary transform/inverse transform is not performed on the current transform block, NSST Idx having a value of 0 may be signaled. Also, MDNSST may not be applied to a block on which transform is skipped. When NSST Idx having a non-zero value is signaled for the current CU, MDNSST may not be applied to a block of components on which transform within the current CU is skipped. When transform is skipped for blocks of all components in the current CU, or when the number of non-zero coefficients of a block on which transform is performed is less than 2, NSST Idx may not be signaled for the current CU. If NSST Idx is not signaled, its value may be inferred to be zero.

NSST may be applied only to a top-left 8x8 or 4x4 region, rather than to all blocks (TU in the case of HEVC) to which the primary transform is applied. For example, 8x8 NSST may be applied when the size of a block is 8x8 or larger, and 4x4 NSST may be applied when the size of the block is less than 8x8. In addition, when the 8x8 NSST is applied, the 4x4 NSST may be applied after being partitioned into 4x4 blocks. Both the 8x8 NSST and the 4x4 NSST follow the configuration of the transform set described above. Since they are non-separable transforms, the 8x8 NSST receives 64 data inputs and outputs 64 data, and the 4x4 NSST has 16 inputs and 16 outputs.

In the present disclosure, NSST/RT/RST may be referred to as low frequency non-separable transform (LFNST). The LFNST may be applied in a non-separable transform format based on a transform kernel (transform matrix or transform matrix kernel) for the low-frequency transform coefficients located in the top-left region of the transform coefficient block. The NSST index or (R)ST index may be referred to as an LFNST index.

As described above, according to intra prediction, a prediction sample similar to a current block may be generated using adjacent neighboring samples within one picture/slice/tile. According to the intra prediction described above, since a prediction block is generated only using adjacent samples located on the left and/or above, there may be a limit in increasing the accuracy of the prediction block. In addition, when a prediction block is generated using adjacent samples without change, a difference value from the current block may unintentionally increase.

As described above, according to the intra prediction method, by performing a step of averagely reducing a difference value between the prediction block and the current block through blending/smoothing, such as smoothing of a pixel value by applying filtering to an adjacent reference sample or filtering some samples in order to reduce discontinuity in the boundary in the prediction block according to the size of mode/block size after generating the prediction block, it is possible to increase prediction performance.

In the present disclosure, various methods capable of improving intra prediction performance by newly defining an intra mode having blending/smoothing characteristics are proposed. The new intra mode proposed in the present disclosure may be called a combined intra prediction mode or a CIP mode. However, this name is arbitrarily determined for convenience and clarity of explanation, and the intra prediction mode proposed in the present disclosure does not necessarily have such a name. Also, in the present disclosure, the CIP mode may be included as one mode of intra prediction. Also, in describing the present disclosure, a first prediction sample may be for a first prediction block, and a second prediction sample may be for a second prediction block.

In addition, in the following, an embodiment in which two prediction blocks are generated based on two prediction modes and a weight is applied to each prediction block, that is, a (final) prediction block is generated based on two weights will be assumed. However, this is also arbitrarily set for convenience and clarity of description of the present disclosure, and the present disclosure is not limited thereto. That is, it is also possible to generate two or more prediction blocks based on two or more prediction modes.

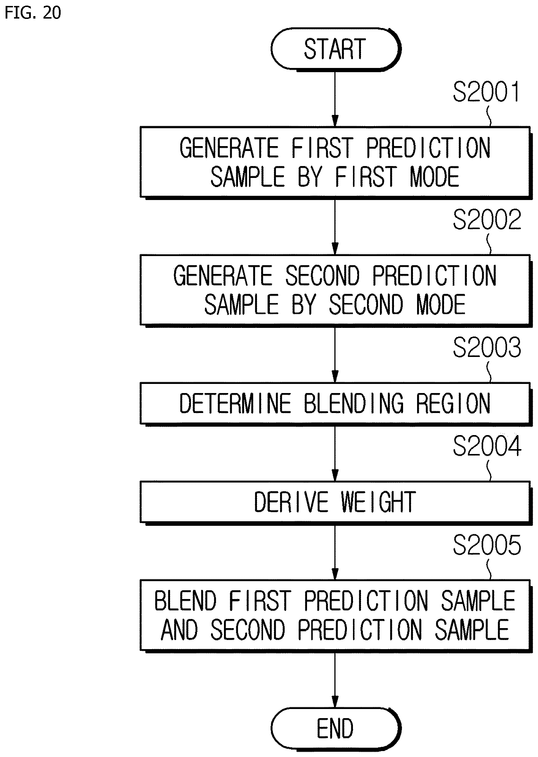

FIG. 20 is a diagram for explaining a process of generating a prediction block by combining a plurality of prediction blocks according to an embodiment of the present disclosure. As an example, the process of FIG. 20 may be a prediction process by intra prediction including a Combined Intra Prediction (CIP) mode, may be performed by an image encoding/decoding apparatus, and may be included in an image encoding/decoding method.

First, a first prediction sample may be generated by a first mode (S2001). As an example, the first mode may be a first intra prediction mode, the first prediction sample may be a first intra prediction sample, and the first prediction sample may be for the first prediction block generated by the first mode. Thereafter, a second prediction sample may be generated by a second mode (S2002). As an example, the second mode may be a second intra prediction mode, and the second mode may be an intra prediction mode different from the first mode. The second prediction sample may be a second intra prediction sample, and the second prediction sample may be for the second prediction block generated based on the second mode. As an example, the first mode and the second mode may be determined according to predetermined rules and/or signaled information. As an example, the first mode and the second mode may be determined as follows.

-   Method 1: Planar mode, Angular mode

According to Method 1, the first mode may be a planar mode, the second mode may be an angular mode or the first mode may be an angular mode and the second mode may be a planar mode.

- Method 2: Planar mode + All modes except for Planar mode

According to Method 2, the first mode may be a planar mode and the second mode may be a mode other than the planar mode or the first mode may be a mode other than the planar mode and the second mode may be a planar mode. The mode other than the planar mode may include an angular mode, a DC mode, a linear model (LM) mode, and the like.

- Method 3: Non-angular mode+ Angular mode

According to Method 3, the first mode may be a non-angular mode and the second mode may be an angular mode or the first mode may be an angular mode and the second mode may be a non-angular mode. The non-angular mode may include a planar mode, a DC mode, an LM mode, and the like. In addition, the non-angular mode may be selectively used by a predetermined condition.

However, the target mode corresponds to an embodiment of the present disclosure, and the first mode and the second mode are not necessarily determined by one of the above methods. For example, both the first mode and the second mode may be determined to be angular modes, and the first mode and the second mode may be determined by another method not mentioned in the present disclosure.

As the non-angular mode of Method 3, for example, a planar mode and a DC mode may be selectively used. As an embodiment, a prediction mode of an adjacent block may be used to select one of the planar mode and the DC mode. More specifically, when both the prediction mode of the left block adjacent to the current block and the prediction mode of the top block are DC modes, the non-angular mode may be determined to be the DC mode instead of the planar.

As another example, when the prediction mode of the left block is a DC mode and the mode of the top block is not a planar mode, the non-angular mode may be determined to be a DC mode. Also, when the prediction mode of the top block is a DC mode and the prediction mode of the left block is not a planar mode, the non-angular mode may be determined to be a DC mode. That is, if at least one of the prediction mode of the left block or the prediction mode of the top block is a planar mode, the non-angular mode may be determined to be a planar mode. Otherwise, if at least one of the prediction mode of the left block and the prediction mode of the top block is a DC mode, the non-angular mode may be determined to be a DC mode. Otherwise, the non-angular mode may be determined to be a planar mode.

The above method of determining the non-angular mode using the prediction mode of the left block and the prediction mode of the top block is only an example of the present disclosure. As another example, if the number of neighboring blocks referred to in the process of deriving MPM (Most Probable Modes) increases, the non-angular mode may be determined based on the frequency among prediction modes of referenceable neighboring blocks, for example, based on the mode with the highest frequency (majority).

In addition, although the embodiment shown in FIG. 20 has been described based on two modes (a first mode and a second mode), two or more modes may be used without being limited to the two modes.

For example, one or more signaled modes and two or more determined modes may be used. Alternatively, two or more signaled modes and one or more determined modes may be used. The determined mode may be a fixed mode or a mode derived by the determined method. When there are two or more determined modes, some may be fixed modes, and others may be modes derived by the determined method.

As another example, one or multiple prediction modes in a mode list determined for the CIP mode may be used. More specifically, the mode list may be configured based on a priority order sorted by the frequency of use of prediction modes, and N (N > 1) modes having a high priority (majority) in the list may implicitly be selected and used. As another example, priorities may be set in advance according to positions of neighboring blocks of the current block, and N modes having higher priorities may be selected and used.

Thereafter, a blending region for blending the generated first prediction sample and second prediction sample may be determined (S2003), and a weight for blending may be derived (S2004).

As an example, the blending region and the weight may be identically defined in advance in an image encoding/decoding apparatus. As another example, one of the blending region and the weight may be defined in advance, and the other may be derived in an encoding/decoding process. As another example, both the blending region and the weight may be derived in an encoding/decoding process. In addition, derivation of the blending region and/or the weights may be performed through separate signaling or may be performed using available information in an encoding/decoding process. It is not limited to any one method in the present disclosure.

When the weight is determined, blending of the first prediction sample and the second prediction sample may be performed (S2005). A (final) prediction block may be generated by blending. The image decoding apparatus may reconstruct a current block based on the (final) prediction block. The image encoding apparatus may generate a residual block for the current block based on the (final) prediction block.

Meanwhile, in the embodiment of FIG. 20, the second prediction sample is shown to be generated after the first prediction sample, but since this is an embodiment, the first prediction sample and the second prediction sample may be generated simultaneously, and other steps may be added between generation of the first prediction sample and generation of the second prediction sample or the order may be changed. Also, steps S2003 and S2004 of FIG. 20 may be performed simultaneously or the order may be changed. Also, other steps may be added between steps S2003 and S2004.

Meanwhile, in the embodiment of FIG. 20, it is assumed that two prediction blocks, that is, a first prediction block and a second prediction block, are generated, but this corresponds to an embodiment of the present disclosure, and two or more prediction blocks are generated in order to generate a (final) prediction block, and may be generated based on each prediction mode, and each prediction mode may be an intra prediction mode.

According to the embodiment of FIG. 20, accuracy of an intra prediction block may be improved in various ways compared to existing intra prediction.

Hereinafter, a signaling method of an intra prediction mode according to a CIP mode of the present disclosure will be described.

As described above, when the CIP mode of the present disclosure uses two prediction modes, the two prediction modes may include one determined mode and another signaled mode. In this case, the signaled mode may be an angular mode or one of modes other than the determined mode. For example, when the determined mode is a planar mode, the signaled mode may be one of an angular mode and a DC mode. As described above, a Most Probable Mode (MPM) may be configured to reduce the signaling overhead of the intra prediction mode. Even in the case of CIP mode, an MPM list may be configured to save bits for prediction mode signaling. The MPM list at this time may be an MPM list for a CIP mode.

For example, the MPM list for the CIP mode may be configured to include only an angular mode. For example, when the above-mentioned signaled mode is limited to the angular mode, the MPM list for the CIP mode may include only an angular mode. In this case, the MPM list may be adjusted so as not to include non-angular modes such as a planar mode or a DC mode. For example, when the MPM list for general intra prediction is composed of {Planar, DC, Vertical, Horizontal, Vertical - 4, Vertical + 4}, the MPM list for the CIP mode may be composed of {Vertical(50), Horizontal(18), Vertical - 4 (46), Vertical + 4 (54), Vertical Diagonal (66), Horizontal Diagonal (2) }, excluding the planar mode and the DC mode.

As another example, the MPM list for the CIP mode may be configured based on the mode selectivity (priority) of the mode selected when the CIP mode is applied. Table 15 shows 10 modes with high selectivity (priority) when the CIP mode is applied. Each number in Table 15 may mean an index value of an intra prediction mode.

[Table 15]

|  | 1 | 2 | 3 | 4 | 5 | 6 | 7 | 8 | 9 | 10 |
|---|---|---|---|---|---|---|---|---|---|---|
| total | 50 | 34 | 18 | 66 | 2 | 65 | 54 | 46 | 63 | 3 |
| ClassA1 | 50 | 66 | 34 | 65 | 2 | 54 | 18 | 46 | 63 | 56 |
| ClassA2 | 50 | 34 | 2 | 18 | 65 | 66 | 54 | 35 | 64 | 4 |
| ClassB | 50 | 18 | 66 | 34 | 49 | 2 | 51 | 65 | 46 | 54 |
| ClassC | 50 | 34 | 18 | 35 | 36 | 66 | 37 | 2 | 33 | 38 |
| ClassD | 50 | 34 | 65 | 2 | 18 | 66 | 46 | 64 | 41 | 54 |
| ClassE | 50 | 18 | 46 | 44 | 54 | 49 | 45 | 43 | 48 | 34 |
| ClassF | 34 | 18 | 50 | 2 | 65 | 32 | 36 | 35 | 66 | 4 |

Intra prediction modes selected when the CIP mode is applied to each class (by test category) are listed in order of priority. That is, the priority may be determined according to the mode selectivity in the CIP mode. According to Table 15, although there are some differences for each test category, it can be confirmed that the selectivities of 50 (Vertical), 18 (Horizontal), 34 (Diagonal), 66 (Vertical Diagonal), 2 (Horizontal Diagonal) and their adjacent modes are high. Considering the selectivity of Table 15, for example, the MPM mode list may be configured as follows.

- {50, 18, 34, 66, 2, 65}
- {50, 34, 18, 66, 2, 65}
- {50, 18, 2, 66, 34, 46}

According to another example of the present disclosure configuring the MPM list for the CIP mode, the intra prediction mode of the left block adjacent to the left of the current block (hereinafter, the left mode) and/or the intra prediction mode of the above block adjacent to the top of the current block (hereinafter, above mode) may be referred to. Also, as described above, it may be configured not to include a non-angular mode. In this case, values obtained by adding or subtracting predetermined offsets to or from available left and/or above modes may be inserted into the MPM list until the MPM list is filled.

More specifically, the left mode (Left) or the above mode (Above) may be used, and when expressed by Left and Above, respectively, the MPM list for the CIP mode is composed of {Left, Above, Min - 1, Max + 1, Min - 2}. Here, Min means a value with a smaller index value of the intra mode between Left and Above, and Max means a value with a larger index value of the intra mode between Left and Above.

As a modified example of the above example, a prediction mode with a low selectivity may be included in the MPM list. This is because there is a possibility that the compression performance of CIP can be improved by using various intra prediction modes for the CIP mode. To this end, for example, the value added or subtracted to or from the left mode and/or the above mode may be set larger than before. For example, the MPM may be derived by applying an offset of ±4n to the left mode and/or the above mode. In this case, n may be an integer of 1 or greater. According to the present embodiment, the MPM list for the CIP mode may be configured as follows, for example.

- {Left, Left - 4, Left + 4, Left - 8, Left + 8, Left - 12}
- {Left, Above, Min - 4, Max + 4, Min - 8, Max + 8}
- {Left, Above, Min + 4, Max - 4, Min + 8, Max - 8}
- {Max, Max - 4, Max + 4, Max - 8, Max + 8, Max - 12}

However, the offset is not limited to ±4n, and offsets such as t2n and ±8n may be applied.

According to another modified example of the present disclosure, the MPM list for the CIP mode may be configured based on a difference between the left mode (Left) and the above mode (Above). For example, the direction (selection period(section)) of the added mode may vary based on the difference between Left and Above.

More specifically, based on the difference between Left and Above, the MPM list for CIP mode may be configured as follows.

(1) When Left and Above are the same, {Left, Left - 4, Left + 4, Left - 8, Left + 8, Left - 12}
(2) When Left and Above are different and both of them are larger than the DC mode,

1) When (Max - Min) >= 48, {Left, Above, Min + 4, Max - 4, Min + 8, Max - 8}
2) When (Max - Min) < 48, {Left, Above, Min - 4, Max + 4, Min - 8, Max + 8}

(3) When Left or Above is DC or planar, {Max, Max - 4, Max + 4, Max - 8, Max + 8, Max - 12}

According to another embodiment of the present disclosure, the number of MPMs for CIP mode may be changed.

Table 16 is a table showing the selectivity of each MPM in the MPM list in the CIP mode. In Table 16, MPMO, .... MPMn indicate the order of MPM candidates included in the MPM list. For example, MPM0 may indicate an MPM candidate included first in the MPM list. For example, according to the overall statistics (total) of Table 16, it can be seen that the ratio of selecting the first MPM (MPM0) (selectivity) was 70.29%, the selectivity of the second MPM (MPM1) was 16.71%, and the selectivity of the third MPM (MPM2) was 4.16%. In addition, it can be seen from Table 16 that the selectivities of MPM3 to MPM5 are similar.

[Table 16]

|  | % of MPM0 | % of MPM1 | % of MPM2 | % of MPM3 | % of MPM4 | % of MPM5 |
|---|---|---|---|---|---|---|
| total | 70.29 | 16.71 | 4.16 | 2.64 | 3.04 | 3.17 |
| QP22 | 63.44 | 21.05 | 5.72 | 3.29 | 3.19 | 3.30 |
| QP27 | 65.89 | 20.90 | 5.00 | 2.71 | 2.59 | 2.91 |
| QP32 | 69.06 | 19.05 | 4.46 | 2.34 | 2.42 | 2.66 |
| QP37 | 68.87 | 18.95 | 4.46 | 2.46 | 2.48 | 2.77 |

Applying different bit lengths to MPM3 to MPM5 having similar selectivities is not very meaningful in terms of bit saving. Therefore, a change may be applied to allocate a fixed length to modes having similar selectivities by increasing the number of MPMs. As an example, an MPM list may be configured with 11 MPMs. Table 17 shows a bit length allocated to the MPM index according to the number of MPMs. 6MPM may be a conventional method of configuring an MPM list with 6 MPMs, and 11MPM may be a method according to an example of the present disclosure for configuring an MPM list with 11 MPMs. As shown in Table 17, MPMO, 1, and 2 having high importance maintain the same bit length as before, and fixed length bits may be allocated to MPM3 to MPM10 having similar selectivities.

[Table 17]

|    | 6 MPM | 11 MPM |
|----|-------|--------|
| 0  | 0     | 0      |
| 1  | 10    | 10     |
| 2  | 110   | 110    |
| 3  | 1110  | 111000 |
| 4  | 11110 | 111001 |
| 5  | 11111 | 111010 |
| 6  | -     | 111011 |
| 7  | -     | 111100 |
| 8  | -     | 111101 |
| 9  | -     | 111110 |
| 10 | -     | 111111 |

According to the present disclosure, when 11 MPM candidates are included in the MPM list, the MPM list for CIP may be configured as follows. The example below is an example in which an offset of $\pm 4n$ is applied, and the offset may be changed to t2n, t8n, and the like and applied. In addition, when determining the offset, the difference between the left mode (Left) and the above mode (Above) may be further considered as described above.

(1) when Left and Above are the same, {Left, Left - 4, Left + 4, Left - 8, Left + 8, Left - 12, Left + 12, Left - 16, Left + 16, Left - 20, Left + 20}
(2) When Left and Above are different and both are greater than DC,

1) When (Max - Min) > 36, {Left, Above, Min + 4, Max - 4, Min + 8, Max - 8, Min + 12, Max - 12, Min + 16, Max - 16, Min + 20}
2) When (Max - Min) <= 36, {Left, Above, Min - 2, Max + 2, Min - 4, Max + 4, Min - 6, Max + 6, Min - 8, Max + 8, Min - 10}

(3) When Left or Above is DC or Planar, {Max, Max - 4, Max + 4, Max - 8, Max + 8, Max - 12, Max + 12, Max - 16, Max + 16, Max - 20, Max + 20}

In the above, an example in which the MPM list for the CIP mode includes 11 MPMs has been described, but this corresponds to one example, and the number of MPMs is not limited to the above example. In addition, adjacent blocks other than the left block or the above block may be used, and an average value or other statistical value may be further used in addition to the minimum or maximum value of the prediction mode of each of the left block and the above block.
Various embodiments and modifications of the configuration of the MPM list for the CIP mode have been described above. The embodiments and modifications described above may be implemented alone or in combination of two or more. Also, part or all of each embodiment may be implemented in combination with part or all of other embodiments.
According to the above embodiment, efficiency can be improved by reducing the number of bits signaled when an intra prediction mode is determined based on the MPM list, and compression performance of CIP can be improved.
Hereinafter, various embodiments of weight derivation and blending for the CIP mode according to the present disclosure will be described.

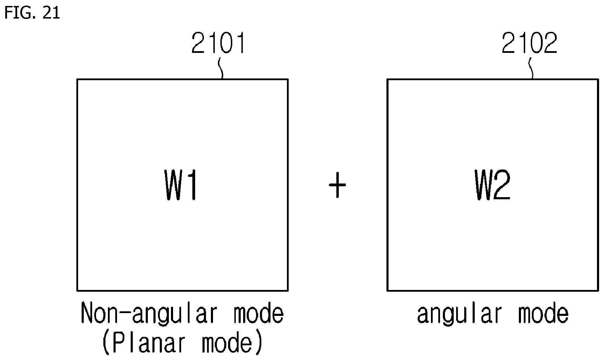

FIG. 21 is a diagram for explaining an embodiment of generating a prediction block in a CIP mode according to the present disclosure. As an example, for clarity of description, the following description is based on a CIP mode based on two prediction modes, and in this case, it is assumed that the two prediction modes are a non-angular mode (planar mode) and an angular mode.

When prediction blocks generated using the two prediction modes are respectively referred to as a first prediction block P1 (2101) and a second prediction block P2 (2102), a final prediction block may be obtained by performing a weighted average of the two prediction blocks. Here, if the final prediction block is P, P may be calculated as follows.

$$[\text{Equation 3}]$$
$$P = (w1 * P1 + w2 * P2) / (w1 + w2)$$

where, w1 may be a first weight, P1 may be a first prediction block, w2 may be a second weight, and P2 may be a second prediction block. The (final) prediction block P may be generated using prediction blocks based on weights. That is, prediction block P may be generated based on a (weighted) sum of prediction blocks Pn. Equation 3 above may be performed as follows by a shift operation.

$$[\text{Equation 4}]$$
$$P = (w1 * P1 + w2 * P2 + \text{offset}) >> \text{rShift}$$

In Equation 4 above, offset = (w1 + w2) >> 1, rShift = Log2(w1 +w2).

According to an example of the present disclosure, a weight w1 applied to P1 and a weight w2 applied to P2 may be the same in units of blocks.

Table 18 shows the performance change according to the weight change of the planar mode and the angular mode.

Table 18

| #1 | Planar: Anqular = 1 : 7 | -0.10% | 0.05% | -0.13% |
|----|-------------------------|--------|-------|--------|
| #2 | Planar: Anqular = 2 : 6 | -0.22% | -0.22% | -0.16% |
| #3 | Planar: Anqular = 3 : 5 | -0.27% | -0.06% | -0.26% |
| #4 | Planar: Anqular = 4 : 4 | -0.25% | -0.09% | -0.21% |
| #5 | Planar : Anqular = 5 : 3 | -0.15% | -0.09% | -0.23% |

Experimentally, according to Table 18, in the CIP mode, a performance improvement effect can be obtained when a weight of 4:4 or 3:5 is applied to the planar-based prediction block and the angular mode-based prediction block. Therefore, based on Table 18 or other performance evaluations, other weights such as w1 (first weight) = 3 and w2 (second weight) = 5 may be applied.

In addition, determining the first weight to be 3 and the second weight to be 5 and applying them may improve performance, but may cause performance degradation depending on the test sequence. Therefore, weights may be determined differently in units of blocks.

For example, the intra prediction mode and block size of the current block may be considered to determine the weight in units of blocks.

For example, when the angular mode is a mode in which edges and directivity are relatively distinct, such as the vertical mode (50) and the horizontal mode (18), first weight w1 = 3 and second weight w2 = 5 are applied, and when the angular mode is another mode, both the first weight and the second weight may be determined to be 4 and applied.

For example, if the block size is smaller than a threshold value, since the complexity of the block is large, the first weight w1 = 3 and the second weight w2 = 5 are determined and applied. Otherwise, the first weight w1 = 4 and the second weight w2 = 4 may be determined and applied. At this time, the size of the block is a product of a block width and a block height, and the threshold value may be 256 or 64. Alternatively, the block size may be a block width or a block height, and the threshold value may be 8, 16, and the like.

The method of determining the weight in consideration of the intra prediction mode and the block size described above corresponds to an embodiment of the present disclosure, and the weight may be determined by arbitrarily configuring conditions without being limited to the above-described example.

Meanwhile, as described above, in describing an embodiment of the present disclosure with reference to FIG. 21, it is assumed that only two prediction blocks are generated based on two prediction modes and only two weights are applied. However, since this is for clarity of explanation, the present disclosure is not limited thereto. For example, two or more prediction blocks may be generated by applying two or more modes without being limited to two modes, and a final prediction block of the current block may be generated as a weighted sum of the two or more prediction blocks. That is, if P is the (final) prediction block and Pn (where n is an arbitrary integer) is the n-th prediction block, the prediction block P may be calculated as (w1* P1 + w2 * P2 + w2 * P2 +.. + wN * PN) / (w1+w2+...+wN). That is, the prediction block P may be expressed as a (weighted) sum of other prediction blocks and may be expressed based on a weight.

According to the above embodiment, more accurate prediction may be performed by applying an appropriate weight to the planar mode/angular mode.

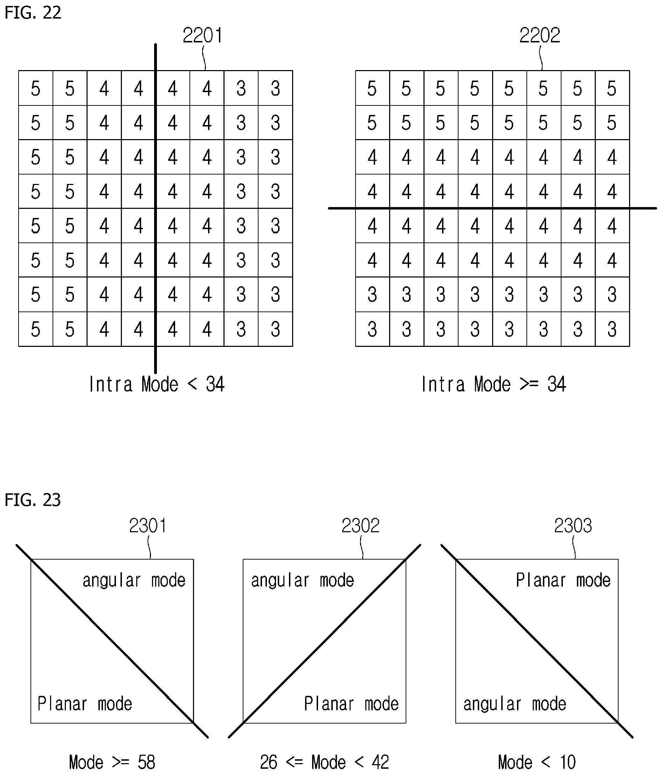

FIG. 22 is a diagram for explaining a weight applied to a prediction sample in intra prediction according to an embodiment of the present disclosure.

As mentioned above, a prediction block P may be calculated as shown in Equation 4 based on a first weight w1, a second weight w2, and a first prediction block P1 and a second prediction block P2 respectively generated using two prediction modes.

According to an embodiment of the present disclosure, different weight values may be applied to each region within a prediction block as shown in FIG. 22. That is, the first weight applied to the first prediction block and/or the second weight applied to the second prediction block may vary according to the position of the prediction sample in the prediction block.

Also, according to an embodiment of the present disclosure, a weight may vary according to the position of the prediction sample based on a prediction direction of an angular mode used in the CIP mode. As an example, it may be determined whether dependency on a left region adjacent to the current block is high or dependency on an above region adjacent to the current block is high according to the mode direction. More specifically, when an intra prediction mode is smaller than a diagonal mode (e.g., the index value is 34) (2201), since prediction is performed based on the reference sample existing in the left region of the current block, the region adjacent to the left boundary in the prediction block may have relatively high prediction accuracy of the angular mode. Therefore, for the region adjacent to the left boundary of the prediction block, the weight value of the prediction sample based on the angular mode may be set to be greater than the weight value of the prediction sample based on the planar mode. Also, in a region relatively far from the left boundary, the weight value of the prediction sample based on the angular mode may be set to be smaller than the weight value of the prediction sample based on the planar mode. Conversely, if the intra prediction mode is equal to or greater than the diagonal mode (e.g., the index value is 34) (2202), since prediction is performed based on the reference sample of the above region of the current block, the region adjacent to the above boundary in the prediction block may have relatively high prediction accuracy of the angular mode. Accordingly, for a region adjacent to an above boundary of a prediction block, the weight value of the prediction sample based on the angular mode may be set to be greater than that of the prediction sample based on the planar mode. Also, in a region relatively far from the above boundary, the weight value of the prediction sample based on the angular mode may be set to be less than the weight value of the prediction sample based on the planar mode.

FIG. 22 illustrates a weight (weight w2 applied to the prediction sample based on the angular mode) for each position of an 8x8 block as an embodiment of the present disclosure. The sum of weights (the first weight w1 and the second weight w2) may be a predetermined value (e.g., 8). Therefore, for example, w1 = 8-w2 may be derived and calculated.

According to the present embodiment, w1:w2 may be x:8-x (0 <= x <= 8), and the weight may be changed in units of N columns/rows (0 < N <width and/or 0 < N <height).

According to the example shown in FIG. 22, w1:w2 may be changed to 3:5, 4:4, and 5:3, and the weight may be changed in units of two columns/rows.

The range of the weight value may be 0 to 8, and the weight change unit may vary based on the size of the block. For example, the weight of a 16x16 block may be changed in units of 4 columns/rows. w1 and w2 are not limited to the above example and may be variously changed and applied. For example, for w1:w2, only 3:5 and 4:4 are allowed, and weights may be changed in units of 4 columns/rows. As another example, for w1:w2, a value within the range of 0:8 to 8:0 is allowed, and the weight may be changed for each sample column/row.

The example shown in FIG. 22 is designed with two patterns based on the intra prediction mode index 34, but is not limited thereto, and several patterns may be designed to exist by subdividing the mode. For example, the mode may be classified according to arbitrary categories such as intra prediction {2-18, 19-34, 35-50, 51-66}, and a weight may be given to each mode in a different form. Alternatively, it is also possible to classify the mode based on an arbitrary specific mode index such as {2, 50, 18, remainder}. Alternatively, several patterns may be designed based on the size or shape (e.g., square or non-square) of the current block (or prediction block). Considering the characteristics of the classified modes, a specific mode may be designed so that the weight is adjusted based on the center of the block or the weight value is changed based on 1/4 or 3/4 of the block.

Meanwhile, the methods described above are all examples of the present disclosure, and positions where weights are changed may be set in various ways in consideration of the intra prediction mode. Alternatively, a position-dependent weight calculation method of a PDPC considering a block size and a pixel position may be applied as a method of changing a weight based on a sample position.

According to the above embodiment, the accuracy of the prediction block can be improved by applying different weights for each region within the prediction block.

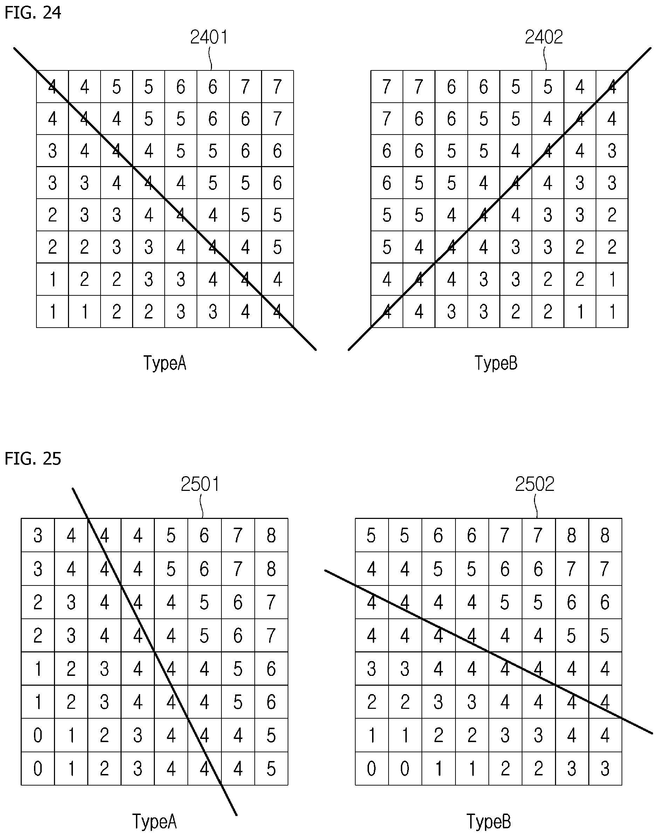

FIG. 23 is a diagram for explaining a division direction of a region of a prediction block, to which a weight is applied, in intra prediction according to an embodiment of the present disclosure, and FIG. 24 is a diagram for explaining a division direction of a region, to which a weight is applied, in intra prediction according to an embodiment of the present disclosure, and FIG. 25 is a diagram for explaining a division direction of a region of a prediction block, to which a weight is applied, in intra prediction according to another embodiment of the present disclosure.

As mentioned above, a final prediction block P may be generated using Equation 4 based on the first weight w1, the second weight w2, and the first prediction block P1 and the second prediction block P2 respectively generated using two prediction modes.

According to an embodiment of the present disclosure, as described with reference to FIGS. 23 to 25, different weights may be applied to sample positions within the prediction block. Also, a dividing line for blending may be determined based on an angular mode and/or separately signaled information.

Prior to describing the embodiments of FIGS. 23 to 25, it is assumed that the first prediction block and the second prediction block are generated based on the planar mode and the angular mode, respectively, for clarity of explanation. However, this corresponds to an embodiment for convenience of description and the present disclosure is not limited thereto.

When the angular mode is equal to or greater than a threshold value A (e.g., the threshold value A is 58), the division direction 2301 of FIG. 23/type A (TypeA) of FIG. 24 (FIG. 24, 2401) may be applied. That is, a dividing line for blending may be set along a diagonal line crossing from an upper left corner to a lower right corner. In FIG. 23, a weight assigned to a prediction sample generated in a mode written in each region of a block may be greater. In this case, the weight for each sample position of each block is w1 :w2 = 8-x : x, that is, the sum of the first weight and the second weight may be 8 or another predetermined value. The weight may be determined as type A 2401 of FIG. 24, for example. Type A of FIG. 24 may indicate a weight w2 applied to a prediction block generated based on the angular mode. w1 may be derived from 8-w2. That is, the weight w1 applied to the prediction block generated in the planar mode may be derived for each sample position based on w2. In this case, the weight assigned to the right triangular region of the prediction block in the angular mode may be equal to or greater than the weight assigned to the left triangular region.

For example, in another example shown in FIG. 23, when threshold value B <= angular mode < threshold value C (e.g., threshold value B is 26 and threshold value C is 42), the division direction 2302 of FIG. 23/Type B of FIG. 24 (FIG. 24, 2402) may be applied. That is, a dividing line for blending may be set along a diagonal line crossing from a top right corner to a bottom left corner. In FIG. 23, a weight assigned to a prediction sample generated in a mode written in each region of a block may be greater. In this case, as described above, the weight for each sample position of each block is w1:w2 = 8-x : x, that is, the sum of the first weight and the second weight may be 8 or another predetermined value. In this case, the weight w2 applied to the prediction block generated based on the angular mode may be determined like type B 2402 of FIG. 24, for example. Similar to the above, the weight w1 at the same sample position may be derived as 8-w2. In this case, the weight assigned to the left triangular region of the prediction block in the angular mode may be equal to or greater than the weight assigned to the right triangular region.

In another embodiment of FIG. 23, when the angular mode < threshold value D (e.g., threshold value D is 10), the weight of the division direction 2303 of FIG. 23 /Type A 2401 of FIG. 24 may be changed and applied. That is, a dividing line for blending may be set along a diagonal line crossing from a top left corner to a bottom right corner. In FIG. 23, a weight assigned to a prediction sample generated in a mode written in each region of a block may be greater. That is, unlike the previous division direction 2301, a relatively large weight may be assigned to the left triangular region of the prediction block in the angular mode. In this case, the weight for each sample position of each block is w1:w2 = 8-x : x, that is, the sum of the first weight and the second weight may be 8 or another predetermined value. The weight may be determined as type A 2401 of FIG. 24, for example. However, in the case of the division direction 2303 of FIG. 23, type A of FIG. 24 may indicate a weight w1 applied to a prediction block generated based on the planar mode. At this time, the weight w2 applied to the prediction block generated in the angular mode may be derived to be 8-w1. In this case, the weight assigned to the right triangular region of the prediction block in the planar mode may be equal to or greater than the weight assigned to the left triangular region.

In the embodiments described with reference to FIGS. 23 and 24, the threshold value and weight may be changed, and several patterns may be designed based on the size or shape (square or non-square) of a block.

However, the dividing line for blending is not limited to the triangular shape described with reference to FIGS. 23 and 24.

FIG. 25 is a diagram for explaining a dividing line for more various types of blending. For example, according to another embodiment of the present invention, a dividing line for blending (a prediction block partitioning method) may be signaled in a bitstream. For example, when information indicating whether the CIP mode is applied (e.g., cip_flag) is 1, this may mean that the CIP mode is applied to the current block. In this case, partitioning information for partitioning (information on a dividing line for blending) may be additionally signaled. A partitioning position within a block may be derived based on the signaled information, and prediction blocks derived from a target prediction mode may be blended according to/based on a determined weight. It is obvious that the partitioning method described in the present embodiment may be combined with other partitioning methods described in the present disclosure. In the embodiment described with reference to FIG. 25, as division information for partitioning, for example, information indicating a division direction (e.g., cip direction_idx) and information indicating a distance (e.g., cip distance_idx) may be additionally signaled. That is, the division shape may be derived from the signaled information.

The weight shown in FIG. 25 may be the weight w2 applied to the prediction sample generated based on the angular mode, and the weight w1 at the same position may be derived as 8-w2. As shown in FIG. 25, in the region corresponding to the dividing line (edge region), a weight of w1:w2 = 4:4 is assigned, and as far from the edge, a weight of w1:w2 = x : 8-x or w1:w2 = 8-x:x may be assigned. In this case, w may be 5 to 8. Similarly to FIG. 23, in the case of FIG. 25, a weight for each position within each prediction block may be differently determined by comparing the prediction mode with a predetermined threshold value.

Meanwhile, although FIGS. 23 to 25 illustrate two divided regions, it is also possible to create two or more divided regions. As an example, when two or more prediction blocks are used, two or more divided regions may be provided. The division direction may be changed. The dividing reference line may be a straight line as shown in FIGS. 23 to 25, but a line in which a direction changes halfway is also possible, and various shapes may be specified.

The above-described weight or a rule for changing the weight (e.g., a row or column interval at which the weight is changed) may be signaled in a bitstream or derived by a certain rule. Also, according to the above embodiment, a weight may be determined for each prediction sample.

On the other hand, the names (e.g., cip_flag) used to describe information above are examples, and it is obvious that they may be referred to as different names, and the division direction or shape may be derived by a set rule or signaled information.

According to the above embodiment, the region of the prediction block may be divided into various types based on the direction of the angular mode, and the prediction accuracy can be adaptively improved in various cases by changing the weight assigned to each region of the prediction block.

Hereinafter, signaling of information on the CIP mode of the present disclosure will be described.

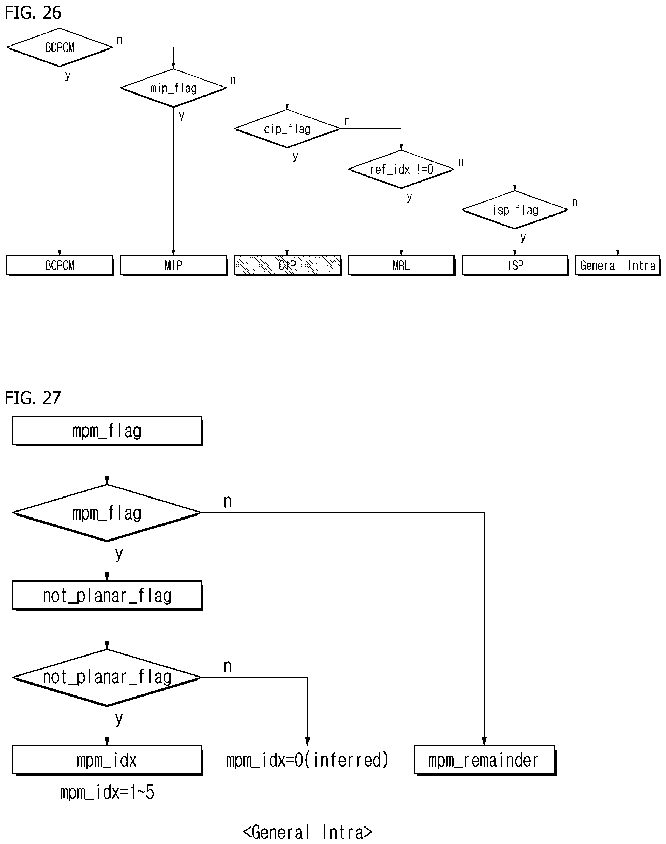

FIG. 26 is a diagram for explaining signaling of information related to intra prediction according to an embodiment of the present disclosure, and more particularly, a diagram for explaining signaling of information related to a CIP mode.

According to the present disclosure, for example, related information may be signaled in the order of BDPCM - MIP - CIP - MRL - ISP, and the signaling order may be changed to BDPCM - MIP - MRL - CIP - ISP or BDPCM - MIP - MRL - ISP - CIP depending on the selectivity of each mode and interoperability between tools, or may be changed differently.

Information related to the CIP mode may include information related to whether or not the CIP mode is applied. For application of the CIP mode, information related to whether or not the CIP mode is applied (e.g., cip_flag) may be signaled. As an example,

As shown in FIG. 26, when MIP is not applied to the current block (e.g., determined based on mip_flag), cip_flag may be signaled. Meanwhile, when it is indicated that CIP is not applied by cip_flag, information (flag) for MRL or ISP may be signaled. Meanwhile, since FIG. 26 corresponds to an embodiment of the present disclosure, it is not necessary to determine whether to apply the CIP mode after determining whether to apply the MIP. That is, signaling of information related to various modes and information related to the CIP mode may not follow the order of FIG. 26.

Meanwhile, upon determining that the CIP mode is applied based on information on whether or not the CIP mode is applied, information on the above-described prediction mode or prediction block division direction may be signaled.

Meanwhile, whether or not the CIP mode is applicable may be determined before signaling of information on whether or not the CIP mode is applied, but the present disclosure is not limited thereto.

According to the above embodiment, whether or not the CIP mode is applied is indicated in the form of a flag, thereby reducing the number of bits and improving signaling efficiency.

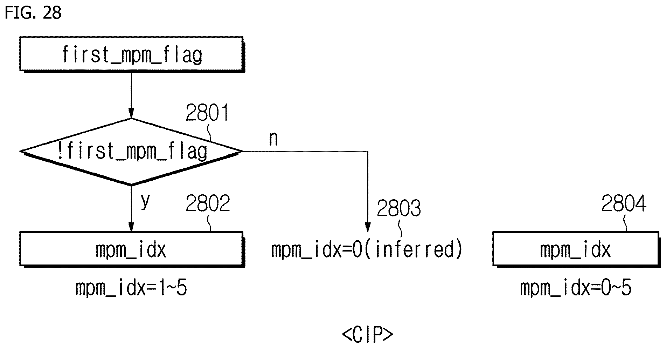

FIG. 27 is a diagram for explaining signaling of information related to an intra prediction mode, and FIG. 28 is a diagram for explaining signaling of information related to an intra prediction mode according to an embodiment of the present disclosure, and more specifically, a diagram for explaining signaling of information related to a CIP mode.

FIG. 27 shows mode signaling when a general intra mode is selected. As an example, when based on 67 intra prediction modes, MPM mode and remaining modes (e.g., remaining modes except for 6 MPMs out of 67 MPMs) are divisionally signaled for intra mode signaling, and when mpm_flag is 1, one of 6 MPMs is signaled. At this time, since the selectivity of the planar mode is very high, not_planar flag, which is information indicating whether the planar mode is used, is separated and signaled by applying context modeling.

On the other hand, FIG. 28 is a diagram for explaining mode signaling when CIP is applied. When CIP is applied, only the mpm mode may be supported without using the remaining mode in consideration of encoding/decoding complexity. In this case, since information on whether MPM is used (mpm_flag) is not required, mpm_flag may not be signaled. Accordingly, bits used to signal mpm_flag may be reduced. Since the selectivity of the first candidate (MPM0) is high in the mpm list for CIP, context modeling is applied to information (e.g., first_mpm_flag) on whether the first candidate is used (2801) as shown in FIG. 28 and signaled. When the first candidate of the MPM list is not used, information indicating the MPM candidate (e.g., mpm_index) 2802 may be signaled. In this case, the information indicating the MPM candidate may indicate other candidates other than the first candidate. For example, in the case of 6 MPM, information indicating MPM candidates may indicate values from 1 to 5. Meanwhile, when the first candidate of the MPM list is used (e.g., first_mpm_flag == 1), information indicating the MPM candidate is not signaled and may be inferred to be a predetermined value (e.g., 0) (2803).

As another example, when signaling information on CIP, only information (e.g., mpm_idx) indicating an MPM candidate may be signaled (2804) as shown on the right side of FIG. 28. For example, the information indicating the MPM candidate may indicate a value within 0 to 5 when the MPM list is 6 MPMs. That is, up to a value obtained by subtracting 1 from the maximum number of MPM candidates may be indicated. In this case, context modeling may be applied to the first bit of the corresponding information.

The embodiment described with reference to FIG. 28 is not limited to the CIP mode and is applicable even when a new intra mode is applied.

Hereinafter, context modelling of CIP related information will be described.

For context modeling of information (e.g., cip_flag) on whether CIP is applied or not, information on whether CIP of a left block and/or an above block is applied or not may be considered. That is, if the left block is not available or CIP is not applied (e.g., cip_flag is 0) and the above block is not available or CIP is not applied, the context index (e.g., ctxIdx) of cip_flag of the current block may be derived to be 0. As another example, if only one of the left block and the above block satisfies a certain condition (e.g., it is available and CIP is applied (e.g., cip_flag is 1)), the context index of cip_flag of the current block may be derived to be 1. When both the left block and the above block are available and CIP is applied, the context index of cip_flag of the current block may be derived to be 2. This may be expressed as in Equation 5 below.

$$[Equation\ 5]$$
$$ctxInc = (\ condL\ \&\&\ availableL\ ) + (\ condA\ \&\&\ availableA\ )$$

where, condL may indicate whether a predetermined condition for the left block is satisfied, and availableL may indicate whether the left block is available. In addition, condA may indicate whether a predetermined condition for the above block is satisfied, and availableA may indicate whether the above block is available. The predetermined condition may be whether CIP is applied to the corresponding block (cip_flag of the corresponding block).

On the other hand, as shown in Table 19, initValue may be derived based on the context index (ctxIdx) of the information by analyzing the occurrence probability of whether CIP is actually applied (cip_flag).

Table 19]

|  | CIP flag == 1 | | | CIP flag == 0 | | |
|---|---|---|---|---|---|---|
|  | None | L/A | L&A | None | L/A | L&A |
| total | 15.96 | 26.45 | 45.86 | 84.04 | 73.55 | 54.14 |
| QP22 | 19.80 | 28.10 | 37.28 | 80.20 | 71.90 | 62.72 |
| QP27 | 16.18 | 26.96 | 53.63 | 83.82 | 73.04 | 46.37 |
| QP32 | 13.10 | 24.99 | 54.91 | 86.90 | 75.01 | 45.09 |
| QP37 | 10.12 | 19.08 | 30.73 | 89.88 | 80.92 | 69.27 |

Also, context modeling may be performed for whether the first MPM candidate is used (first_mpm_flag). The first MPM candidate means MPM0 and may have a probability shown in Table 20. Therefore, initValue may be derived without considering the MPM candidate index (mpm_idx) of the adjacent block.

[Table 20]

|  | % of MPM0 | % of else |
|---|---|---|
| total | 70.29 | 29.71 |

(continued)

|  | % of MPM0 | % of else |
|---|---|---|
| QP22 | 63.44 | 36.56 |
| QP27 | 65.89 | 34.11 |
| QP32 | 69.06 | 30.94 |
| QP37 | 68.87 | 31.13 |

Meanwhile, the method may not be limited to CIP specific tools. That is, the mode information signaling method of FIG. 28 is applicable even when other modes for intra prediction are applied.

According to the above embodiment, the number of bits may be reduced and efficient signaling is possible.

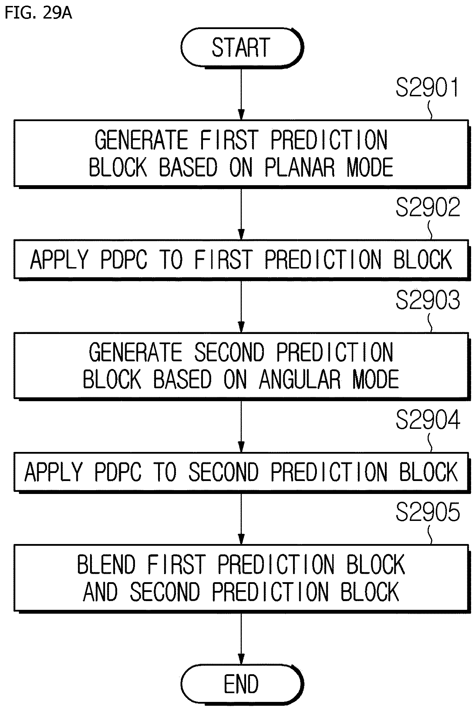

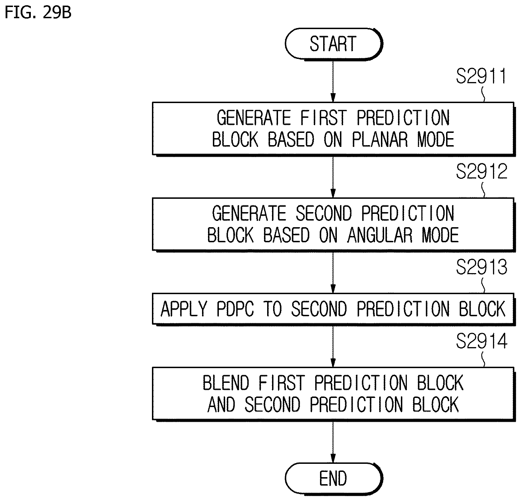

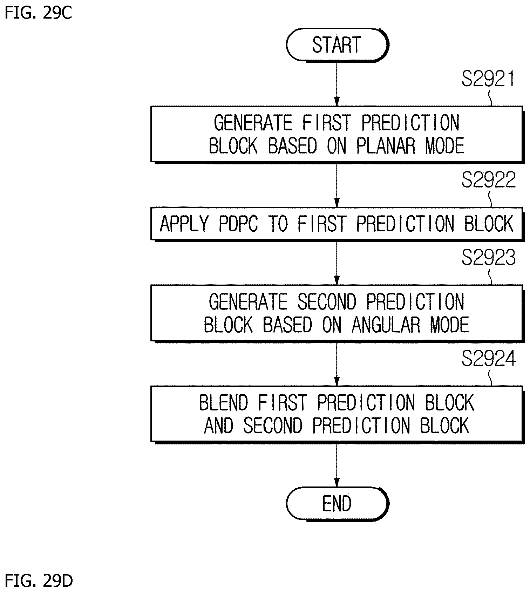

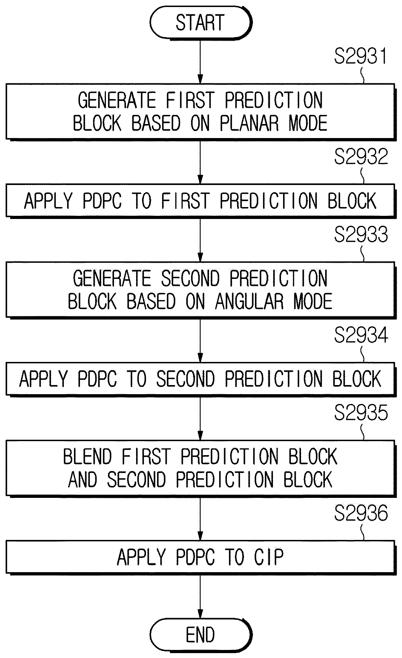

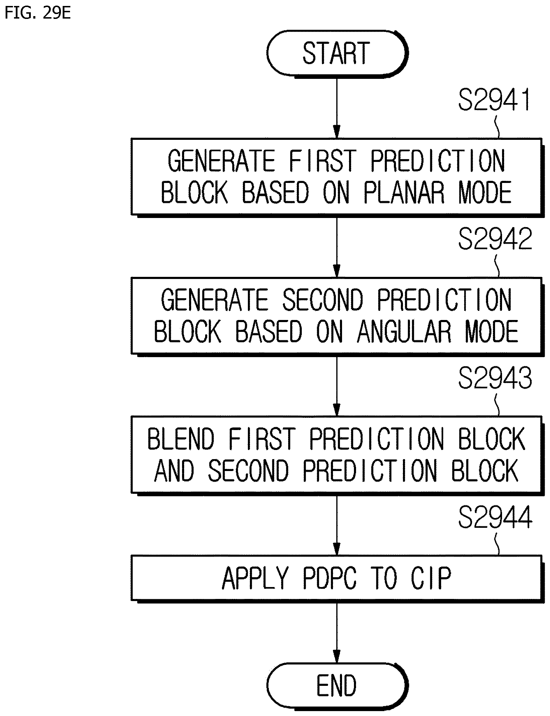

FIGS. 29a, 29b, 29c, 29d, and 29e are diagrams for explaining various examples of applying PDPC for boundary smoothing in intra prediction in CIP mode according to the present disclosure.

If two or more prediction blocks are generated by each intra mode, PDPC for the intra mode may be applied as described above. Prediction accuracy of each mode can be improved by applying PDPC, which gives a boundary smoothing effect within a block.

Meanwhile, in describing the embodiments of FIGS. 29a to 29e , it is assumed that intra prediction is performed based on the planar mode and the angular mode. However, the present disclosure is not limited thereto.

According to the embodiment of FIG. 29a, a prediction block (first prediction block) may be generated based on the planar mode (S2901), and PDPC may be applied to the first prediction block (S2902). Thereafter, a prediction block (second prediction block) may be generated based on the angular mode (S2903), and PDPC may be applied to the second prediction block (S2904). That is, when the CIP mode is applied, PDPC may be applied to each of prediction blocks generated based on each mode. After applying PDPC to each of the prediction blocks, a (final) prediction block may be generated by blending the two prediction blocks (S2905). In the example shown in FIG. 29a, step S2901 shall be performed prior to step S2902, and step S2903 shall be performed prior to step S2904. Also, steps S2901 to S2904 shall be performed prior to step S2905. However, since there is no causal relationship in the order of the other steps, it is not limited to the example shown in FIG. 29a. That is, the order between steps without casual relationship may be changed. For example, it is obvious that step S2903 may be performed prior to step S2902. Also, steps not shown in FIG. 29a may be added.

According to the embodiment of FIG. 29b, a prediction block (first prediction block) may be generated based on the planar mode (S2911), and a prediction block (second prediction block) may be generated (S2912) based on the angular mode. Thereafter, PDPC may be applied only to the second prediction block (S2913). That is, the PDPC for the first prediction block may be omitted. Thereafter, a (final) prediction block may be generated by blending the first prediction block and the second prediction block to which the PDPC is applied (S2914). In the example shown in FIG. 29b, step S2912 shall be performed prior to step S2913. In addition, steps S2911 to S2913 shall be performed prior to step S2914. However, since there is no causal relationship in the order of the other steps, it is not limited to the example shown in FIG. 29b. That is, the order between steps without causal relationship may be changed. For example, it is obvious that step S2912 may be performed prior to step S2911. Also, steps not shown in FIG. 29b may be added.

According to the embodiment of FIG. 29c, a prediction block (first prediction block) may be generated based on the planar mode (S2921), and PDPC may be applied to the first prediction block (S2922). A prediction block (second prediction block) may be generated based on the angular mode (S2923). A (final) prediction block may be generated by blending the first prediction block to which PDPC is applied and the second prediction block to which PDPC is not applied (S2924). In the example shown in FIG. 29c, step S2921 shall be performed prior to step S2922. Also, steps S2921 to S2923 shall be performed prior to step S2924. However, since there is no causal relationship in the order of the other steps, it is not limited to the example shown in FIG. 29c. That is, the order between steps without causal relationship may be changed. For example, it is obvious that step S2923 may be performed prior to step S2922. Also, steps not shown in FIG. 29c may be added.

According to the embodiment of FIG. 29d, a prediction block (first prediction block) may be generated based on the planar mode (S2931), and PDPC may be applied to the first prediction block (S2932). A prediction block (second prediction block) may be generated based on the angular mode (S2933), and PDPC may be applied to the second prediction block (S2934). A blended (final) prediction block may be generated by blending the first prediction block to which PDPC is applied and the second prediction block to which PDPC is applied (S2935). PDPC may be applied to the final prediction block (S2936). In the example shown in FIG. 29d, step S2931 shall be performed prior to step S2932, and step S2933 shall be performed prior to step S2934. In addition, steps S2931 to S2934 shall be performed prior to step S2935. Also, step S2935 shall be performed prior to step S2936. However, since there is no causal relationship in the order of the other steps, it is not limited to the example shown in FIG. 29d. That is, the order between steps without causal relationship may be changed. For example, it is obvious that step S2933 may be performed prior to step S2932. Also, steps not shown in FIG. 29d may be added.

According to the embodiment of FIG. 29e, a prediction block (first prediction block) is generated based on the planar mode (S2941), a prediction block (second prediction block) is generated based on the angular mode (S2942), and after blending the first prediction block and the second prediction block (S2943), PDPC may be applied to the blended (final) prediction block (S2944). In the example shown in FIG. 29e, steps S2941 and S2942 shall be performed prior to step S2943. Also, step S2943 shall be performed prior to step S2944. However, since there is no causal relationship between the order of the other steps, it is not limited to the example shown in FIG. 29e. That is, the order between steps without causal relationship may be changed. For example, it is obvious that step S2942 may be performed prior to step S2941. Also, steps not shown in FIG. 29e may be added.

As described above with reference to FIGS. 29a to 29e, in the blending step, the first prediction sample and the second prediction sample may be blended. Also, as described above, PDPC may be applied to the first prediction block and/or the second prediction block. Also, PDPC may be applied only to a predetermined mode (e.g., angular mode). In addition, PDPC for CIP may be applied to a prediction block generated after blending. In this case, PDPC for CIP may be additionally applied after PDPC is applied to the prediction block generated in each prediction mode, or PDPC for CIP may be applied without applying PDPC to each prediction block.

In addition, as PDPC applied after blending, PDPC for the planar/DC or angular mode may be applied without change. That is, existing PDPC may be used. Alternatively, PDPC newly designed for the CIP mode may be applied. Although the prediction mode has been described as a combination of planar and angular modes, this is only an example, and the present disclosure is not limited thereto. Therefore, a method of calculating a position-dependent weight of PDPC based on one or more of an intra prediction mode, a shape of a block, and/or a size of a block for a target mode may be applied differently, without being limited to a combination of planar mode and angular mode.

According to the above embodiment, by applying PDPC to a prediction block in various ways, a prediction signal for each position can be corrected with a difference between neighboring samples, a prediction error can be reduced, and encoding performance can be improved as a result.

Hereinafter, filtering of a reference sample of intra prediction in a CI mode of the present disclosure will be described.

When generating a prediction block based on each intra prediction mode, reference samples adjacent to the current block may be filtered. In this case, for the two target modes used in the CIP mode, different interpolation filters may be selected and used based on at least one of the intra prediction mode, block shape, and/or block size. For example, since a plurality of prediction blocks are blended based on a plurality of modes, a sharpening filter such as a cubic interpolation filter may be applied as an interpolation filter of a reference sample for an angular mode for a specific block to prevent over-smoothing may be applied. As another example, in order to emphasize a smoothing effect of a specific block, a Gaussian interpolation filter may always be applied as an interpolation filter of the reference sample for a plurality of target modes.

According to the above embodiment, prediction accuracy can be improved by applying an interpolation filter in the intra prediction mode. In particular, in the angular mode, pixels at decimal positions can be more accurately predicted.

Hereinafter, transform of a residual signal in a CIP mode of the present disclosure will be described.

The distribution of the residual signal when the CIP mode is applied may be different from the distribution of the residual signal in the general intra mode. Accordingly, LFNST and MTS for CIP mode may be set/applied separately. That is, when the CIP mode is selected for the current block, the CIP mode is applicable as an input intra mode for the LFNST for the residual signal of the current block. In addition, when the CIP mode is selected for the current block, the MTS for the residual signal of the current block may be fixed to index 0 and applied.

Hereinafter, ISP and MRL in a CIP mode of the present disclosure will be described.

When the CIP mode is applied to the current block, the above-described ISP may be applied as another tool for intra prediction. That is, the CIP mode is applicable even when the current block CU is divided into several sub-blocks. In addition, when the CIP mode is applied to the current block, the above-described MRL may be applied for an angular mode, which is one of intra mode candidates.

Hereinafter, application of a CIP mode to a chroma component of the present disclosure will be described.

The prediction mode for the chroma component may be derived in various ways, such as using one of determined modes or using an intra mode of a luma component located at a collocated position without change.

When the above-described CIP mode is applied to chroma components, the following conditions may be considered. For example, the CIP mode for the chroma block may be applied when some or all of the following conditions are satisfied.

- cip_flag for the collocated luma block true.
- The intra prediction mode of the collocated luma block is an angular mode.
- An intra prediction mode for a chroma block is a DM mode. (DM mode means a prediction mode that applies the intra prediction mode of the collocated luma component without change, as described above)

- The current block (CU) has a single-tree structure.

For example, based on the CIP mode being applied to the collocated luma block and the intra prediction mode of the collocated luma block being an angular mode, the CIP mode may be applied to the current chroma block. In this case, an MPM list for reconstructing the intra prediction mode of the current chroma block may or may not be configured based on whether the intra prediction mode of the current chroma block is a DM mode. For example, when the intra prediction mode of the current chroma block is a DM mode, the MPM list for the current chroma block may not be configured. In this case, the intra prediction mode of the current chroma block may be determined to be the intra prediction mode of the collocated luma block. For example, when the intra prediction mode of the current chroma block is not a DM mode, an MPM list for the current chroma block may be configured. In this case, the MPM list may be configured such that non-angular modes (planar and/or DC) are not included. In the above, the DM mode or the intra prediction mode derived based on the MPM list may be a signaled intra prediction mode (e.g., angular mode) between two intra prediction modes used in the CIP mode of the present disclosure.

Also, when the CIP mode is applied to a chroma block, the same blending ratio as the blending ratio (weight) of the corresponding luma block may be applied. Alternatively, as another example, different blending ratios may be applied according to the type of color component. That is, different blending ratios may be used for the luma component and the chroma component according to the color component. For example, one of 3:5/5:3/4:4 may be selected and used for the luma component, and only 4:4 may be selected for the chroma component. However, since this corresponds to an embodiment of the present disclosure, the present disclosure is not limited to the above-described CIP application conditions or blending ratio.

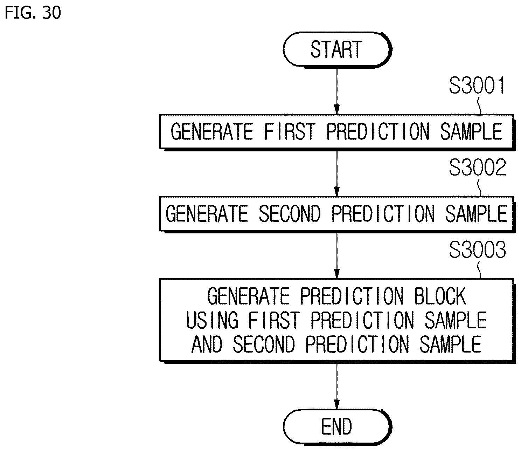

FIG. 30 is a diagram for explaining an image encoding/decoding process for performing an example of CIP mode-based intra prediction according to the present disclosure.

As an example, FIG. 30 may show part of an image decoding process performed by the image decoding apparatus. In the image decoding process, a first prediction sample may be generated (S3001). The first prediction sample may be generated based on a first intra prediction mode. As an example, the first prediction sample may be generated based on application of the CIP mode, and a first weight may be applied. In addition, a second prediction sample may be generated (S3002). The second prediction sample may be generated based on a second intra prediction mode. As an example, the second prediction sample may be generated based on application of the CIP mode, and a second weight may be applied. As an example, one of the first intra prediction mode and the second intra prediction mode may be signaled in a bitstream, and the other one may be determined to be a predetermined mode. Here, the predetermined mode may be a planar mode or a non-angular mode. For example, the first intra prediction mode may be determined to be a predetermined mode and the second intra prediction mode may be signaled in a bitstream. For example, the second intra prediction mode is determined based on a Most Probable Mode (MPM) list, and the MPM list includes an angular mode derived by the neighboring block of the current block and an angular mode obtained by adding or subtracting 4n (in this case, n is a positive integer) to or from the derived angular mode. Meanwhile, the second intra prediction mode may be an angular mode, and the first intra prediction mode may be a non-angular mode, such as a planar mode. Here, the signaling of the second intra prediction mode may include only the MPM index for the MPM list, but may further include other information.

Meanwhile, the first weight or the second weight may be determined in units of blocks based on at least one of the second intra prediction mode or the size of the current block. The first weight or the second weight may be determined differently for each sample position within the current block based on the second intra prediction mode. Also, the first weight or the second weight may be differently determined based on a comparison between the second intra prediction mode and a predetermined threshold mode. The first weight or the second weight may be determined differently based on a distance between a reference region of intra prediction determined according to the second intra prediction mode and a sample position in the current block. Meanwhile, the image decoding process may further include determining a dividing line dividing the current block into two or more regions, and the first weight or the second weight may be determined differently based on the dividing line. The dividing line may be determined based on the second intra prediction mode. The dividing line may be determined based on division information obtained from a bitstream.

As an example, when the current block is a chroma block, the first weight and the second weight may be determined based on a first weight and a second weight of a luma block at a position corresponding to the position of the current block.

Thereafter, a prediction block may be generated using the generated first prediction sample and the generated second prediction sample (S3003). Here, the prediction block may be a final prediction block, and may be generated by applying a first weight and a second weight to the first prediction sample and the second prediction sample, respectively. Meanwhile, the generated prediction block may be used to reconstruct the current block.

Meanwhile, although not represented in FIG. 30, information on the first prediction mode or the second prediction mode of the first prediction sample or the second prediction sample may be obtained before the first prediction sample or the second prediction sample is generated. For example, it may further include obtaining information on whether to perform prediction on the current block based on an intra prediction mode (e.g., CIP mode) from a bitstream before generating the first prediction sample.

As another example, FIG. 30 may show an example of an image encoding process performed by an image encoding apparatus. In the image encoding process, a first prediction sample may be generated (S3001). The first prediction sample may be generated based on a first intra prediction mode. As an example, the first prediction sample may be generated after determining to apply the CIP mode, and a first weight may be applied to the first prediction sample. In addition, a second prediction sample may be generated (S3002). The second prediction sample may be generated based on a second intra prediction mode. As an example, the second prediction sample may be generated after determining to apply the CIP mode, and a second weight may be applied to the second prediction sample. As an example, the first intra prediction mode may be determined to be a predetermined mode and the second intra prediction mode may be encoded into a bitstream. As an example, the predetermined mode may be a planar mode, and the second intra prediction mode encoded into the bitstream may be an angular mode. As an example, the second intra prediction mode is determined based on a Most Probable Mode (MPM) list, and the MPM list includes an angular mode derived by the neighboring block of the current block and an angular mode obtained by adding or subtracting $4n$ (where $n$ is a positive integer) to or from the derived mode. Meanwhile, the second intra prediction mode may be an angular mode, and the first intra prediction mode may be a non-angular mode, such as a planar mode. Here, the second intra prediction mode signaling may include only the MPM index for the MPM list, but may further include other information.

Meanwhile, the first weight or the second weight may be determined in units of blocks based on at least one of the second intra prediction mode or the size of the current block. The first weight or the second weight may be determined differently for each sample position within the current block based on the second intra prediction mode. Also, the first weight or the second weight may be differently determined based on a comparison between the second intra prediction mode and a predetermined threshold mode. The first weight or the second weight may be determined differently based on a distance between a reference region of intra prediction determined according to the second intra prediction mode and a sample position in the current block. Meanwhile, the image encoding process may further include determining a dividing line dividing the current block into two or more regions, and the first weight or the second weight may be determined differently based on the dividing line. The dividing line may be determined based on the second intra prediction mode, or may be encoded and signaled by the image encoding apparatus as division information.

As an example, when the current block is a chroma block, the first weight and the second weight may be determined based on a first weight and a second weight of a luma block at a position corresponding to the position of the current block.

Thereafter, a prediction block may be generated using the generated first prediction sample and the generated second prediction sample (S3003). Here, the prediction block may be a final prediction block, and may be generated by applying a first weight and a second weight to the first prediction sample and the second prediction sample, respectively. Meanwhile, the generated prediction block may be used for reconstruction of the current block. This is as described above with reference to other drawings.

Meanwhile, although not represented in FIG. 30, a process of encoding information on the first prediction mode or the second prediction mode of the first prediction sample or the second prediction sample into a bitstream may be included. In addition, a process of encoding information on whether to perform prediction on the current block based on an intra prediction mode into a bitstream may be further included. In addition, it may be determined whether CIP is applicable to the current block and/or whether to apply CIP, and information on this may be encoded.

Meanwhile, the intra prediction mode of the chroma component of the current block may be determined based on the intra prediction mode of the luma component of the current block.

In addition, since FIG. 30 corresponds to an embodiment of the present disclosure, some steps may be added, changed, or deleted, and the order of steps may be changed.

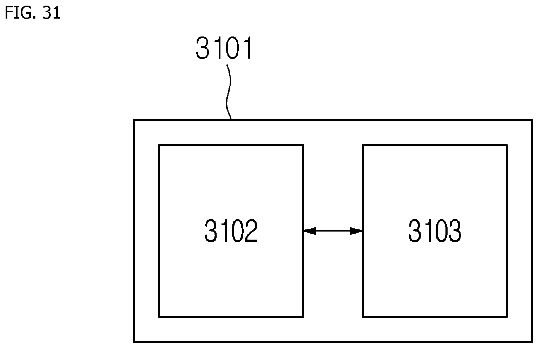

FIG. 31 is a diagram for explaining an image encoding/decoding apparatus for performing intra prediction according to an embodiment of the present disclosure.

As an embodiment, the image encoding/decoding apparatus 3101 of FIG. 31 may include a memory 3102 for storing data and a processor 3103 for controlling the memory, and may image encoding/decoding described above based on the processor. In addition, it may be a simplified representation of the apparatus of FIGS. 2 and 3 and may perform the functions described above.

As an embodiment, the image encoding/decoding apparatus 3101 generates a first prediction sample for a current block based on a first intra prediction mode, generates a second prediction sample for the current block based on a second intra prediction mode, and generates a prediction block for the current block based on the first prediction sample and the second prediction sample. The prediction block may be generated by applying a first weight and a second weight to the first prediction sample and the second prediction sample, respectively.

Various embodiments according to the present disclosure may be used alone or in combination with other embodiments.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus and the image encoding apparatus, to which the embodiments of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

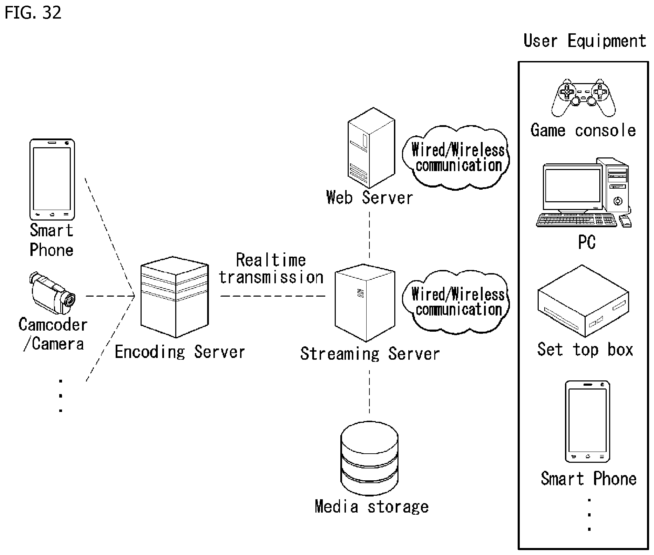

FIG. 32 is a view showing a content streaming system, to which an embodiment of the present disclosure is applicable.

As shown in FIG. 32, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

   reconstructing information indicating whether prediction based on two or more intra prediction modes is performed on a current block,
   wherein, based on the information indicating that prediction based on the two or more intra prediction modes is performed on the current block, the image decoding method further comprises:

      generating a first prediction sample for the current block based on a first intra prediction mode;
      generating at least one second prediction sample for the current block based on at least one second intra prediction mode; and
      generating a prediction block for the current block based on the first prediction sample and the second prediction sample, and
      wherein the prediction block is generated by respectively applying a first weight and a second weight to the first prediction sample and the second prediction sample.

2. The image decoding method of claim 1, wherein the first intra prediction mode is determined to be a predetermined mode and the second intra prediction mode is signaled in a bitstream.

3. The image decoding method of claim 2,

   wherein the second intra prediction mode is determined based on a most probable mode (MPM) list, and
   wherein the MPM list comprises an angular mode derived by a neighboring block of the current block and an angular mode obtained by adding or subtracting 4n (n being a positive integer) to or from the derived angular mode.

4. The image decoding method of claim 1, wherein the second intra prediction mode is an angular mode and the first intra prediction mode is a non-angular mode.

5. The image decoding method of claim 4, wherein the first weight or the second weight is determined in a block unit based on at least one of the second intra prediction mode or a size of the current block.

6. The image decoding method of claim 5, wherein the first weight or the second weight is determined differently for each sample position in the current block based on the second intra prediction mode.

7. The image decoding method of claim 6, wherein the first weight or the second weight is determined differently based on a comparison between the second intra prediction mode and a predetermined threshold mode.

8. The image decoding method of claim 6, wherein the first weight or the second weight is determined differently based on a distance between a reference region of intra prediction determined according to the second intra prediction mode and a sample position in the current block.

9. The image decoding method of claim 4, further comprising determining a dividing line dividing the current block into two or more regions,
   wherein the first weight or the second weight is determined differently based on the dividing line.

10. The image decoding method of claim 9, wherein the dividing line is determined based on the second intra prediction mode.

11. The image decoding method of claim 9, wherein the dividing line is determined based on division information obtained from the bitstream.

12. The image decoding method of claim 1, wherein signaling of the second intra prediction mode comprises only an MPM index for the MPM list.

13. The image decoding method of claim 1, wherein, based on the current block being a chroma block, the first weight and the second weight are determined based on a first weight and a second weight for a luma block at a position corresponding to a position of the current block.

14. An image encoding method performed by an image encoding apparatus, the image encoding method comprising:

determining and encoding information indicating whether prediction based on two or more intra prediction modes is performed on a current block,
wherein, based on the information indicating that prediction based on the two or more intra prediction modes is performed on the current block, the image encoding method further comprises:

generating a first prediction sample for the current block based on a first intra prediction mode;
generating at least one second prediction sample for the current block based on at least one second intra prediction mode; and
generating a prediction block for the current block based on the first prediction sample and the second prediction sample, and
wherein the prediction block is generated by respectively applying a first weight and a second weight to the first prediction sample and the second prediction sample.

15. A method of transmitting a bitstream generated by the image encoding method of claim 14.

FIG. 1

10

11
VIDEO SOURCE
GENERATOR

12
ENCODING UNIT

13
TRANSMITTER

20

23
RENDERER

22
DECODING UNIT

21
RECEIVER

FIG. 2

FIG. 3

FIG. 4

| | | | |
|---|---|---|---|
| SPLIT_BT_VER | SPLIT_BT_HOR | SPLIT_TT_VER | SPLIT_TT_HOR |

FIG. 5

FIG. 6

```
                          ┌──────────┐
                          │  START   │
                          └────┬─────┘
                               │                           S610
        ┌──────────────────────▼──────────────────────┐
        │     PERFORM PREDICTION (DETERMINE            │
        │  INTRA PREDICTION MODE/TYPE, DERIVE          │
        │     NEIGHBORING REFERENCE SAMPLES,           │
        │   AND GENERATE PREDICTION SAMPLES)           │
        └──────────────────────┬──────────────────────┘
                               │                           S620
        ┌──────────────────────▼──────────────────────┐
        │   RESIDUAL PROCESSING (DERIVE RESIDUAL       │
        │  SAMPLES ON BASIS OF PREDICTION SAMPLES)     │
        └──────────────────────┬──────────────────────┘
                               │                           S630
        ┌──────────────────────▼──────────────────────┐
        │    ENCODE IMAGE/VIDEO INFORMATION            │
        │   INCLUDING PREDICTION INFORMATION           │
        │       AND RESIDUAL INFORMATION               │
        └──────────────────────┬──────────────────────┘
                               │
                          ┌────▼─────┐
                          │   END    │
                          └──────────┘
```

FIG. 7

INTRA PREDICTION UNIT

FIG. 8

```
                    ┌─────────────┐
                    │    START    │
                    └──────┬──────┘
                           │                    S810
                           ▼
        ┌──────────────────────────────────────┐
        │ DETERMINE INTRA PREDICTION MODE/TYPE  │
        │    FOR CURRENT BLOCK ON BASIS OF      │
        │    RECEIVED PREDICTION INFORMATION    │
        └──────────────────┬───────────────────┘
                           │                    S820
                           ▼
        ┌──────────────────────────────────────┐
        │  DERIVE NEIGHBORING REFERENCE SAMPLES │
        └──────────────────┬───────────────────┘
                           │                    S830
                           ▼
        ┌──────────────────────────────────────┐
        │          PERFORM PREDICTION           │
        │    (GENERATE PREDICTION SAMPLES)      │
        └──────────────────┬───────────────────┘
                           │                    S840
                           ▼
        ┌──────────────────────────────────────┐
        │       DERIVE RESIDUAL SAMPLES ON      │
        │      BASIS OF RESIDUAL INFORMATION    │
        └──────────────────┬───────────────────┘
                           │                    S850
                           ▼
        ┌──────────────────────────────────────┐
        │        GENERATE RECONSTRUCTED         │
        │  BLOCK/PICTURE ON BASIS OF PREDICTION │
        │     SAMPLES AND RESIDUAL SAMPLES      │
        └──────────────────┬───────────────────┘
                           │
                           ▼
                    ┌─────────────┐
                    │     END     │
                    └─────────────┘
```

FIG. 9

265

266

INTRA PREDICTION
MODE/TYPE
DETERMINATION UNIT

INTRA PREDICTION
MODE/TYPE INFORMATION

267

REFERENCE SAMPLE
DERIVATION UNIT

RECONSTRUCTED REFERENCE
REGION IN CURRENT PICTURE

268

PREDICTION SAMPLE
DERIVATION UNIT

PREDICTION SAMPLE

INTRA PREDICTOR

FIG. 10

```
                    ┌─────────┐
                    │  START  │
                    └────┬────┘
                         │                            S1010
         ┌───────────────▼───────────────────────┐
         │         CONFIGURE MPM LIST              │
         └───────────────┬───────────────────────┘
                         │                            S1020
         ┌───────────────▼───────────────────────┐
         │ DETERMINE INTRA PREDICTION MODE OF CURRENT BLOCK │
         └───────────────┬───────────────────────┘
                         │                            S1030
         ┌───────────────▼───────────────────────┐
         │   ENCODE INTRA PREDICTION MODE INFORMATION  │
         │     (INCLUDING MPM FLAG, MPM IDX AND/OR     │
         │   REMAINING INTRA PREDICTION MODE INFORMATION) │
         └───────────────┬───────────────────────┘
                         │
                    ┌────▼────┐
                    │   END   │
                    └─────────┘
```

FIG. 11

```
                    ┌─────────┐
                    │  START  │
                    └────┬────┘
                         │                            S1110
         ┌───────────────▼───────────────────────┐
         │    OBTAIN INTRA PREDICTION MODE INFORMATION │
         │       (INCLUDING MPM FLAG, MPM IDX          │
         │     AND/OR REMAINING INTRA PREDICTION       │
         │     MODE INFORMATION) FROM BITSTREAM        │
         └───────────────┬───────────────────────┘
                         │                            S1120
         ┌───────────────▼───────────────────────┐
         │         CONFIGURE MPM LIST              │
         └───────────────┬───────────────────────┘
                         │                            S1130
         ┌───────────────▼───────────────────────┐
         │   DETERMINE INTRA PREDICTION MODE OF        │
         │    CURRENT BLOCK BASED ON MPM LIST          │
         │    AND INTRA PREDICTION INFORMATION         │
         └───────────────┬───────────────────────┘
                         │
                    ┌────▼────┐
                    │   END   │
                    └─────────┘
```

FIG. 12

START

S1210

OBTAIN INTRA PREDICTION MODE
INFORMATION FROM BITSTREAM

S1220

CONFIGURE MPM LIST

S1230

MPM
FLAG == 1?
(OR SPECIFIC INTRA PREDICTION
TYPE (LIP/MRL/ISP)
APPLIED?)

No

S1250

DETERMINE INTRA PREDICTION MODE
OF CURRENT BLOCK AMONG INTRA
PREDICTION MODES NOT INCLUDED
IN MPM LIST BASED ON REMAINING
INTRA PREDICTION MODE INFORMATION

Yes

S1240

DETERMINE INTRA PREDICTION
MODE OF CURRENT BLOCK BASED ON
MPM LIST AND MPM INDEX

END

FIG. 13

luma block          chroma block

FIG. 14

FIG. 15

FIG. 16

(a) Diagonal top-right mode

(b) Diagonal bottom-left mode

(c) Adjacent diagonal top-right mode

(d) Adjacent diagonal bottom-left mode

FIG. 17

FIG. 18A

FIG. 18B

FIG. 19

FIG. 20

```
                    ┌─────────────┐
                    │    START    │
                    └──────┬──────┘
                           │           S2001
                           ▼
          ┌────────────────────────────────┐
          │    GENERATE FIRST PREDICTION    │
          │      SAMPLE BY FIRST MODE       │
          └────────────────┬───────────────┘
                           │           S2002
                           ▼
          ┌────────────────────────────────┐
          │   GENERATE SECOND PREDICTION    │
          │     SAMPLE BY SECOND MODE       │
          └────────────────┬───────────────┘
                           │           S2003
                           ▼
          ┌────────────────────────────────┐
          │    DETERMINE BLENDING REGION    │
          └────────────────┬───────────────┘
                           │           S2004
                           ▼
          ┌────────────────────────────────┐
          │          DERIVE WEIGHT          │
          └────────────────┬───────────────┘
                           │           S2005
                           ▼
          ┌────────────────────────────────┐
          │  BLEND FIRST PREDICTION SAMPLE  │
          │  AND SECOND PREDICTION SAMPLE   │
          └────────────────┬───────────────┘
                           │
                           ▼
                    ┌─────────────┐
                    │     END     │
                    └─────────────┘
```

FIG. 21

2101

2102

W1 + W2

Non-angular mode
(Planar mode)

angular mode

FIG. 22

2201

| 5 | 5 | 4 | 4 | 4 | 4 | 3 | 3 |
| 5 | 5 | 4 | 4 | 4 | 4 | 3 | 3 |
| 5 | 5 | 4 | 4 | 4 | 4 | 3 | 3 |
| 5 | 5 | 4 | 4 | 4 | 4 | 3 | 3 |
| 5 | 5 | 4 | 4 | 4 | 4 | 3 | 3 |
| 5 | 5 | 4 | 4 | 4 | 4 | 3 | 3 |
| 5 | 5 | 4 | 4 | 4 | 4 | 3 | 3 |
| 5 | 5 | 4 | 4 | 4 | 4 | 3 | 3 |

Intra Mode < 34

2202

| 5 | 5 | 5 | 5 | 5 | 5 | 5 | 5 |
| 5 | 5 | 5 | 5 | 5 | 5 | 5 | 5 |
| 4 | 4 | 4 | 4 | 4 | 4 | 4 | 4 |
| 4 | 4 | 4 | 4 | 4 | 4 | 4 | 4 |
| 4 | 4 | 4 | 4 | 4 | 4 | 4 | 4 |
| 4 | 4 | 4 | 4 | 4 | 4 | 4 | 4 |
| 3 | 3 | 3 | 3 | 3 | 3 | 3 | 3 |
| 3 | 3 | 3 | 3 | 3 | 3 | 3 | 3 |

Intra Mode >= 34

FIG. 23

2301

angular mode

Planar mode

Mode >= 58

2302

angular mode

Planar mode

26 <= Mode < 42

2303

Planar mode

angular mode

Mode < 10

FIG. 24

2401

| 4 | 4 | 5 | 5 | 6 | 6 | 7 | 7 |
|---|---|---|---|---|---|---|---|
| 4 | 4 | 4 | 5 | 5 | 6 | 6 | 7 |
| 3 | 4 | 4 | 4 | 5 | 5 | 6 | 6 |
| 3 | 3 | 4 | 4 | 4 | 5 | 5 | 6 |
| 2 | 3 | 3 | 4 | 4 | 4 | 5 | 5 |
| 2 | 2 | 3 | 3 | 4 | 4 | 4 | 5 |
| 1 | 2 | 2 | 3 | 3 | 4 | 4 | 4 |
| 1 | 1 | 2 | 2 | 3 | 3 | 4 | 4 |

TypeA

2402

| 7 | 7 | 6 | 6 | 5 | 5 | 4 | 4 |
|---|---|---|---|---|---|---|---|
| 7 | 6 | 6 | 5 | 5 | 4 | 4 | 4 |
| 6 | 6 | 5 | 5 | 4 | 4 | 4 | 3 |
| 6 | 5 | 5 | 4 | 4 | 4 | 3 | 3 |
| 5 | 5 | 4 | 4 | 4 | 3 | 3 | 2 |
| 5 | 4 | 4 | 4 | 3 | 3 | 2 | 2 |
| 4 | 4 | 4 | 3 | 3 | 2 | 2 | 1 |
| 4 | 4 | 3 | 3 | 2 | 2 | 1 | 1 |

TypeB

FIG. 25

2501

| 3 | 4 | 4 | 4 | 5 | 6 | 7 | 8 |
|---|---|---|---|---|---|---|---|
| 3 | 4 | 4 | 4 | 5 | 6 | 7 | 8 |
| 2 | 3 | 4 | 4 | 4 | 5 | 6 | 7 |
| 2 | 3 | 4 | 4 | 4 | 5 | 6 | 7 |
| 1 | 2 | 3 | 4 | 4 | 4 | 5 | 6 |
| 1 | 2 | 3 | 4 | 4 | 4 | 5 | 6 |
| 0 | 1 | 2 | 3 | 4 | 4 | 4 | 5 |
| 0 | 1 | 2 | 3 | 4 | 4 | 4 | 5 |

TypeA

2502

| 5 | 5 | 6 | 6 | 7 | 7 | 8 | 8 |
|---|---|---|---|---|---|---|---|
| 4 | 4 | 5 | 5 | 6 | 6 | 7 | 7 |
| 4 | 4 | 4 | 4 | 5 | 5 | 6 | 6 |
| 4 | 4 | 4 | 4 | 4 | 4 | 5 | 5 |
| 3 | 3 | 4 | 4 | 4 | 4 | 4 | 4 |
| 2 | 2 | 3 | 3 | 4 | 4 | 4 | 4 |
| 1 | 1 | 2 | 2 | 3 | 3 | 4 | 4 |
| 0 | 0 | 1 | 1 | 2 | 2 | 3 | 3 |

TypeB

FIG. 26

```
       BDPCM ──n──┐
         │        │
         y     mip_flag ──n──┐
         │        │          │
         │        y       cip_flag ──n──┐
         │        │          │          │
         │        │          y      ref_idx !=0 ──n──┐
         │        │          │          │            │
         │        │          │          y        isp_flag ──n──┐
         │        │          │          │            │         │
         │        │          │          │            y         │
      ┌──┴──┐  ┌──┴──┐  ┌────┴────┐ ┌───┴──┐  ┌──────┴──┐ ┌────┴──────┐
      │BCPCM│  │ MIP │  │   CIP   │ │ MRL  │  │   ISP   │ │General Intra│
      └─────┘  └─────┘  └─────────┘ └──────┘  └─────────┘ └───────────┘
```

FIG. 27

```
        ┌──────────────┐
        │   mpm_flag   │
        └──────┬───────┘
               │
          ╱────┴────╲
         ╱ mpm_flag  ╲──────n──────────────────────┐
          ╲         ╱                               │
           ╲───┬───╱                                │
               y                                    │
        ┌──────┴───────┐                            │
        │not_planar_flag│                           │
        └──────┬───────┘                            │
               │                                    │
          ╱────┴────╲                               │
         ╱not_planar ╲──────n──────┐                │
         ╲  _flag    ╱             │                │
           ╲───┬───╱               │                │
               y                   │                │
        ┌──────┴───────┐    mpm_idx=0(inferred) ┌───┴──────────┐
        │   mpm_idx    │                        │mpm_remainder │
        └──────────────┘                        └──────────────┘
         mpm_idx=1~5
```

<General Intra>

FIG. 28

```
┌─────────────────────────┐
│     first_mpm_flag      │
└─────────────────────────┘
              │
              ▼        2801
         ◇─────────────◇         n
         │!first_mpm_flag│──────────────┐
         ◇─────────────◇               │
              │ y    2802               │  2803
              ▼                         ▼
┌─────────────────────────┐   mpm_idx=0(inferred)
│        mpm_idx          │
└─────────────────────────┘
     mpm_idx=1~5
```

2804
┌─────────────────────────┐
│        mpm_idx          │
└─────────────────────────┘
     mpm_idx=0~5

<CIP>

FIG. 29A

START

GENERATE FIRST PREDICTION
BLOCK BASED ON PLANAR MODE
S2901

APPLY PDPC TO FIRST PREDICTION BLOCK
S2902

GENERATE SECOND PREDICTION
BLOCK BASED ON ANGULAR MODE
S2903

APPLY PDPC TO SECOND PREDICTION BLOCK
S2904

BLEND FIRST PREDICTION BLOCK
AND SECOND PREDICTION BLOCK
S2905

END

FIG. 29B

```
            ┌─────────┐
            │  START  │
            └────┬────┘
                 │                              S2911
        ┌────────▼─────────────────┐
        │  GENERATE FIRST PREDICTION │
        │  BLOCK BASED ON PLANAR MODE │
        └────────┬─────────────────┘
                 │                              S2912
        ┌────────▼─────────────────┐
        │ GENERATE SECOND PREDICTION │
        │  BLOCK BASED ON ANGULAR MODE│
        └────────┬─────────────────┘
                 │                              S2913
   ┌─────────────▼──────────────────────┐
   │ APPLY PDPC TO SECOND PREDICTION BLOCK │
   └─────────────┬──────────────────────┘
                 │                              S2914
        ┌────────▼─────────────────┐
        │  BLEND FIRST PREDICTION BLOCK │
        │  AND SECOND PREDICTION BLOCK │
        └────────┬─────────────────┘
                 │
            ┌────▼────┐
            │   END   │
            └─────────┘
```

FIG. 29C

START

GENERATE FIRST PREDICTION
BLOCK BASED ON PLANAR MODE
S2921

APPLY PDPC TO FIRST PREDICTION BLOCK
S2922

GENERATE SECOND PREDICTION
BLOCK BASED ON ANGULAR MODE
S2923

BLEND FIRST PREDICTION BLOCK
AND SECOND PREDICTION BLOCK
S2924

END

FIG. 29D

START

S2931

GENERATE FIRST PREDICTION
BLOCK BASED ON PLANAR MODE

S2932

APPLY PDPC TO FIRST PREDICTION BLOCK

S2933

GENERATE SECOND PREDICTION
BLOCK BASED ON ANGULAR MODE

S2934

APPLY PDPC TO SECOND PREDICTION BLOCK

S2935

BLEND FIRST PREDICTION BLOCK
AND SECOND PREDICTION BLOCK

S2936

APPLY PDPC TO CIP

END

FIG. 29E

```
                          ╭─────────────╮
                          │    START    │
                          ╰─────────────╯
                                 │
                                 │              S2941
                                 ▼
              ┌──────────────────────────────────┐
              │    GENERATE FIRST PREDICTION      │
              │    BLOCK BASED ON PLANAR MODE     │
              └──────────────────────────────────┘
                                 │
                                 │              S2942
                                 ▼
              ┌──────────────────────────────────┐
              │    GENERATE SECOND PREDICTION     │
              │    BLOCK BASED ON ANGULAR MODE    │
              └──────────────────────────────────┘
                                 │
                                 │              S2943
                                 ▼
              ┌──────────────────────────────────┐
              │    BLEND FIRST PREDICTION BLOCK   │
              │    AND SECOND PREDICTION BLOCK    │
              └──────────────────────────────────┘
                                 │
                                 │              S2944
                                 ▼
              ┌──────────────────────────────────┐
              │        APPLY PDPC TO CIP          │
              └──────────────────────────────────┘
                                 │
                                 ▼
                          ╭─────────────╮
                          │     END     │
                          ╰─────────────╯
```

FIG. 30

```
                           ┌─────────────┐
                           │    START    │
                           └──────┬──────┘
                                  │           S3001
                                  ▼
              ┌──────────────────────────────────────┐
              │  GENERATE FIRST PREDICTION SAMPLE     │
              └──────────────────┬───────────────────┘
                                 │            S3002
                                 ▼
              ┌──────────────────────────────────────┐
              │  GENERATE SECOND PREDICTION SAMPLE    │
              └──────────────────┬───────────────────┘
                                 │            S3003
                                 ▼
              ┌──────────────────────────────────────┐
              │      GENERATE PREDICTION BLOCK        │
              │   USING FIRST PREDICTION SAMPLE       │
              │   AND SECOND PREDICTION SAMPLE        │
              └──────────────────┬───────────────────┘
                                 │
                                 ▼
                           ┌─────────────┐
                           │     END     │
                           └─────────────┘
```

FIG. 31

FIG. 32

## INTERNATIONAL SEARCH REPORT

| | |
|---|---|
| International application No. | |
| | **PCT/KR2022/005158** |

### A. CLASSIFICATION OF SUBJECT MATTER

**H04N 19/11**(2014.01)i; **H04N 19/593**(2014.01)i; **H04N 19/132**(2014.01)i; **H04N 19/184**(2014.01)i; **H04N 19/70**(2014.01)i; **H04N 19/119**(2014.01)i; **H04N 19/186**(2014.01)i

According to International Patent Classification (IPC) or to both national classification and IPC

### B. FIELDS SEARCHED

Minimum documentation searched (classification system followed by classification symbols)

H04N 19/11(2014.01); H04N 19/105(2014.01); H04N 19/109(2014.01); H04N 19/117(2014.01); H04N 19/119(2014.01); H04N 19/577(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 인트라(intra), 예측(predict), 모드(mode), 샘플(sample), 가중치(weight), MPM(most probable mode)

### C. DOCUMENTS CONSIDERED TO BE RELEVANT

| Category* | Citation of document, with indication, where appropriate, of the relevant passages | Relevant to claim No. |
|---|---|---|
| Y | KR 10-2019-0056332 A (ELECTRONICS AND TELECOMMUNICATIONS RESEARCH INSTITUTE) 24 May 2019 (2019-05-24) See paragraphs [0261], [0313], [0532] and [0563]-[0565]; and claims 1-4. | 1-15 |
| Y | KULUPANA, Gosala et al. Non-CE3: Combined-Hypothesis Intra-Prediction with Unified Intra Mode Coding. JVET-N0248. Joint Video Experts Team (JVET) of ITU-T SG 16 WP 3 and ISO/IEC JTC 1/SC 29/WG 11. 14th Meeting: Geneva, CH. pp. 1-4, 12 March 2019. See page 1. | 1-15 |
| Y | KR 10-2020-0110214 A (HYUNDAI MOTOR COMPANY et al.) 23 September 2020 (2020-09-23) See paragraph [0069]. | 9-11 |
| Y | KR 10-2021-0034534 A (ELECTRONICS AND TELECOMMUNICATIONS RESEARCH INSTITUTE et al.) 30 March 2021 (2021-03-30) See claims 1 and 6. | 13 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 July 2022** | **04 July 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2022/005158** |

**C.     DOCUMENTS CONSIDERED TO BE RELEVANT**

| Category* | Citation of document, with indication, where appropriate, of the relevant passages | Relevant to claim No. |
|---|---|---|
| A | KR 10-2020-0095579 A (SAMSUNG ELECTRONICS CO., LTD.) 10 August 2020 (2020-08-10) <br> See claim 1. | 1-15 |

Form PCT/ISA/210 (second sheet) (July 2019)

**INTERNATIONAL SEARCH REPORT**
Information on patent family members

International application No.

**PCT/KR2022/005158**

| Patent document cited in search report | | | Publication date (day/month/year) | Patent family member(s) | | | Publication date (day/month/year) |
|---|---|---|---|---|---|---|---|
| KR | 10-2019-0056332 | A | 24 May 2019 | CN | 111373755 | A | 03 July 2020 |
| | | | | US | 11350107 | B2 | 31 May 2022 |
| | | | | US | 2020-0366900 | A1 | 19 November 2020 |
| | | | | WO | 2019-098758 | A1 | 23 May 2019 |
| KR | 10-2020-0110214 | A | 23 September 2020 | CN | 113924777 | A | 11 January 2022 |
| | | | | WO | 2020-185004 | A1 | 17 September 2020 |
| KR | 10-2021-0034534 | A | 30 March 2021 | WO | 2021-054805 | A1 | 25 March 2021 |
| KR | 10-2020-0095579 | A | 10 August 2020 | CN | 112042190 | A | 04 December 2020 |
| | | | | EP | 3787287 | A1 | 03 March 2021 |
| | | | | EP | 3787287 | A4 | 13 April 2022 |
| | | | | JP | 2021-522713 | A | 30 August 2021 |
| | | | | KR | 10-2021-0049213 | A | 04 May 2021 |
| | | | | KR | 10-2247665 | B1 | 03 May 2021 |
| | | | | US | 11297315 | B2 | 05 April 2022 |
| | | | | US | 2021-0014487 | A1 | 14 January 2021 |
| | | | | WO | 2019-209028 | A1 | 31 October 2019 |

Form PCT/ISA/210 (patent family annex) (July 2019)